(19) Europäisches Patentamt
European Patent Office
Office européen des brevets

(11) **EP 4 235 843 A1**

(12) **EUROPÄISCHE PATENTANMELDUNG**

(43) Veröffentlichungstag:
**30.08.2023   Patentblatt 2023/35**

(21) Anmeldenummer: **22158312.3**

(22) Anmeldetag: **23.02.2022**

(51) Internationale Patentklassifikation (IPC):
*H01M 4/06* (2006.01)  *H01M 4/24* (2006.01)
*H01M 4/38* (2006.01)  *H01M 4/50* (2010.01)
*H01M 4/62* (2006.01)  *H01M 4/90* (2006.01)
*H01M 6/14* (2006.01)  *H01M 12/06* (2006.01)

(52) Gemeinsame Patentklassifikation (CPC):
**H01M 4/06; H01M 4/24; H01M 4/386; H01M 4/50;
H01M 4/625; H01M 4/9016; H01M 6/14;
H01M 12/06**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder:
• **Evonik Operations GmbH
45128 Essen (DE)**

• **Forschungszentrum Jülich GmbH
52425 Jülich (DE)**

(72) Erfinder: **Die Erfindernennung liegt noch nicht vor**

(74) Vertreter: **Evonik Patent Association
c/o Evonik Industries AG
IP Management
Bau 1042A/PB 15
Paul-Baumann-Straße 1
45772 Marl (DE)**

(54) **PRIMÄRZELLE ENTHALTEND ELEKTROLYTZUSAMMENSETZUNG UND INSBESONDERE MIKRO-PARTIKULÄRE NANOKRISTALLINE SILIZIUM-PARTIKEL**

(57)   Gegenstand der Erfindung ist eine elektrochemische Primärzelle mit metall-enthaltendem Anodenmaterial, insbesondere zur Verwendung in elektrochemischen Primärzellen mit alkalischem Elektrolyten, wobei das Metall-enthaltende Anodenmaterial Silizium umfasst sowie Kohlenstoff und mindestens ein weiteres Metall umfasst sowie eine wässrige, alkalische Elektrolytzusammensetzung, die vorzugsweise umfasst mindestens eine Hydroxycarbonsäure, Carboxylat einer Hydroxycarbonsäure, Ester einer Hydroxycarbonsäure, Ether eines Carboxylates einer Hydroxycarbonsäure, polymere Verbindung basierend auf mindestens einer Hydroxycarbonsäure oder Gemische enthaltend mindestens zwei der vorgenannten Verbindungen. Des Weiteren umfasst die Erfindung eine mehrzellige Batterie, die Verwendung als Elektrolyt in einer Primärzelle mit Silizium als Anodenmaterial in Form von Silizium-Partikeln, die aus einem Silizium Recyclingprozess stammen mit einer Partikelgröße zwischen 1 nm bis 90000 nm vorliegen. Wobei das Anodenmaterial im geladenen Zustand vorzugsweise kein Lithium umfasst und, wobei die Siliziumpartikel optional im Wesentlichen nanokristallin sind.

EP 4 235 843 A1

**Beschreibung**

Gegenstand der Erfindung ist eine Primärzelle mit metall-enthaltendem Anodenmaterial, insbesondere zur Verwendung in elektrochemischen Primärzellen mit alkalischem Elektrolyten, wobei das Metall-enthaltende Anodenmaterial Silizium umfasst sowie Kohlenstoff und als weiteres Metall oder weitere Metalle mindestens ein Metall der nachfolgend genannten Metalle Mangan, Kalzium, Zink, Aluminium, Eisen und/oder Legierung umfassend eines oder mehrere der vorgenannten Metalle umfasst, wobei die Oberfläche des Metall-enthaltenden Anodenmaterials zumindest teilweise Sauerstoff enthaltende Silizium-Verbindungen aufweist.

Die Erfindung betrifft auch eine wässrige, alkalische Elektrolytzusammensetzung, umfassend eine Hydroxycarbonsäure, Carboxylat einer Hydroxycarbonsäure, Ester einer Hydroxycarbonsäure, Ether eines Carboxylates einer Hydroxycarbonsäure, polymere Verbindung basierend auf mindestens einer Hydroxycarbonsäure oder Gemische enthaltend mindestens zwei der vorgenannten Verbindungen.

Des Weiteren umfasst die Erfindung eine mehrzellige Batterie, die Verwendung als Elektrolyt in einer Primärzelle mit Silizium als Anodenmaterial in Form von Silizium-Partikeln, die als Siliziumpartikel mit einer Partikelgröße zwischen 10 nm bis 99000 nm vorliegen, wobei das Anodenmaterial im geladenen Zustand vorzugsweise Metalle umfasst und die Siliziumpartikel kristallin und/oder optional amorph sind.

Aufgrund des zunehmenden Bedarfes an E-Mobility im Personennahverkehr durch Elektroautos, Elektrofahrräder sowie elektrisch betriebene Busse etc. als auch bei zunehmender dezentraler Stromgewinnung besteht ein enormer Bedarf an umweltverträglichen Batterien, deren Komponenten einerseits unbeschränkt verfügbar und andererseits unbeschränkt recyclebar, umweltverträglich und/oder weiter verwendbar sein sollen. Silizium ist ein auf der Erde unbegrenzt verfügbarer Rohstoff. Darüber hinaus müssen die Komponenten einer Batterie kostengünstig verfügbar sein.

Des Weiteren ist es bekannt, durch ständige Zufuhr eines Brennstoffes in Brennstoffzellen, die eine galvanische Zelle aufweisen, in Gegenwart eines Oxidationsmittels elektrische Energie zu erzeugen. Grundsätzlich ist dieses Prinzip auch für Silizium-Luft-Batterien denkbar. Silizium ist gemäß diesem Prinzip ein Brennstoff. Im Allgemeinen bezeichnet man Brennstoffe auch als Kraftstoffe. Zudem sind übliche Silizium enthaltende Lithium-Ionen-Sekundärbatterien täglich weltweit im Einsatz.

Aufgabe der Erfindung war es die Leistungsfähigkeit und Lebensdauer einer Silizium enthaltenden galvanischen Zelle, insbesondere alkalischen galvanischen Zelle, zu verbessern und eine nachhaltige Rohstoffbasis bereitzustellen. Ferner soll die Leistungsdichte einer solchen Silizium enthaltenden galvanischen Zelle verbessert und eine hohe Zellspannung erreicht werden.

Des Weiteren bestand die Aufgabe eine Silizium enthaltende galvanische Zelle bereitzustellen, die vorzugsweise frei von Lithium ist, wobei vorzugsweise bedeutet frei von Lithium, dass der Gehalt an Lithium im geladenen Zustand unter 1 Gew.-% in der Gesamtzusammensetzung der Primärzelle beträgt, insbesondere umfassend die Anode, die Kathode und den Elektrolyten, vorzugsweise beträgt der Gehalt an Lithium im Elektrodenmaterial der Anode im geladenen Zustand unter 0,1 Gew.-%.

Die Aufgaben wurden gelöst durch eine Primärzelle mit Metall-enthaltendem Anodenmaterial nach Anspruch 1 das neben Kohlenstoff teilweise Sauerstoff enthaltende Silizium-Verbindungen aufweist. Insofern werden die Aufgaben auch gelöst durch eine Primärzelle umfassen eine Elektrolytzusammensetzung nach Anspruch 2 sowie der mehrzelligen Batterie nach Anspruch 17 und der Verwendung nach Anspruch 18. In den Unteransprüchen sowie in der Beschreibung sind bevorzugte Ausführungsformen detaillierter dargestellt. Des Weiteren konnte die Aufgabe gelöst werden, indem die elektrochemische Primärzelle als galvanische Zelle Edukte und Reaktionsprodukte aufweisen kann, die aus Recyclingprozessen der Silizium-Waferherstellung stammen, Nebenprodukte aus der Silizium-Waferherstellung sind und/oder aus Recyclingprozessen von Silizium enthaltenden Materialien weiterverwendet werden können.

Gegenstand der Erfindung ist eine elektrochemische Primärzelle mit Metall-enthaltendem Anodenmaterial sowie alkalischem Elektrolyten, wobei das Metall-enthaltende Anodenmaterial Silizium umfasst sowie Kohlenstoff und mindestens ein weiteres Metall umfasst, wobei das mindestes eine weitere Metall mindestens ein Metall von Mangan, Kalzium, Zink, Aluminium, Eisen und/oder eine Legierung umfassend eines oder mehrere der vorgenannten weiteren Metalle umfasst, wobei die Oberfläche des Metall-enthaltenden Anodenmaterials zumindest teilweise Sauerstoff enthaltende Silizium-Verbindungen aufweist.

Das Anodenmaterial kann umfassen 75 bis 99,999 Gew.-%, insbesondere 75 bis 98 Gew.-%, Silizium sowie 1 bis 24,999 Gew.-% Kohlenstoff und 0,001 bis 5 Gew.-% mindestens ein weiteres Metall, wobei die Gesamtzusammensetzung des Anodenmaterials 100 Gew.-% beträgt.

Nach einer Alternative kann das Anodenmaterial umfassen 75 bis 89,999 Gew.-%, insbesondere 75 bis 98 Gew.-%, Silizium sowie 10 bis 24,999 Gew.-% Kohlenstoff und 0,001 bis 5 Gew.-% mindestens ein weiteres Metall, wobei die Gesamtzusammensetzung des Anodenmaterials 100 Gew.-% beträgt.

Besonders bevorzugt ist ein Anodenmaterial das neben Silizium (Si) und Siliziumcarbid (SiC), als Metall (im Folgenden abgekürzt: Me) umfasst Eisen (Fe), Kalzium (Ca), Zink (Zn), Aluminium (Al), Mangan (Mn), Kupfer (Cu), Titan (Ti), Magnesium (Mg), Phosphor (P) und/oder Legierung umfassend eines oder mehrere der vorgenannten Metalle und optional Lithium (Li), insbesondere umfassend eine Legierung Silizium, Mangan, Kalzium, Zink, Aluminium und/oder Eisen und jeweils optional Lithium, bevorzugt umfasst das weitere Metall Mangan, Kalzium, Zink, Aluminium und/oder Eisen und jeweils optional Lithium. Bevorzugt beträgt der Gesamtgehalt des mindestens einen weiteren Metalls 0,001 bis 7,5 Gew.-%, insbesondere von 0,003 bis 5 Gew.-% in Bezug auf die Gesamtzusammensetzung.

In einer besonders bevorzugten Alternative weist die Oberfläche des Anodenmaterials Metall-Sauerstoff-Silizium-Strukturen auf, die nachfolgend auch als Me-O-Si-Struktur bezeichnet werden, wobei die Silizium-Struktur, hier Si-Struktur, Bestandteil einer funktionellen Siliziumenthaltenden Verbindung sein kann oder ist.

Gegenstand der Erfindung ist auch eine wässrige, alkalische Elektrolytzusammensetzung, enthaltend

- 2,0 bis 99,0 Gew.-% Wasser, und
- 0,0001 bis 15 Gew.-% mindestens eine Hydroxycarbonsäure, Carboxylat einer Hydroxycarbonsäure, Ester einer Hydroxycarbonsäure, Ether eines Carboxylats einer Hydroxycarbonsäure, polymere Verbindungen basierend auf Hydroxycarbonsäuren, Carboxylaten von Hydroxycarbonsäure, Estern von Hydroxycarbonsäuren oder Gemisch enthaltend mindestens zwei der vorgenannten Verbindungen, und
- einen Gehalt von 0,001 bis 40 Gew.-%, insbesondere 10 bis 40 Gew.-%, Alkalihydroxid in Bezug auf die Gesamtzusammensetzung von 100 Gew.-%.

Nach einer besonders bevorzugten Alternative ist Hydroxycarbonsäure ausgewählt aus Enantiomeren, Diastereomeren oder Gemischen dieser. Bevorzugt sind α-Hydroxycarbonsäuren. Besonders bevorzugt ist Milchsäure, vorzugsweise D- und/oder L-Milchsäure sowie Gemische von D-/L-Milchsäure.

Bevorzugt umfasst die Elektrolytzusammensetzung mindestens ein Alkalihydroxid ausgewählt aus NaOH und KOH und optional weitere alkalisch lösliche Salze, wie beispielsweise Erdalkalihydroxide, basische Metalloxide oder organische Basen. Bevorzugt umfasst die Elektrolytzusammensetzung ein Alkalihydroxid ausgewählt aus KOH und NaOH.

Zur Herstellung der wässrigen Elektrolytzusammensetzung wird vorzugsweise destilliertes Wasser eingesetzt.

Nach einer besonders bevorzugten Alternative ist die Hydroxycarbonsäure ausgewählt aus Milchsäure, insbesondere D-Milchsäure, L-Milchsäure und/oder Gemische von D/L-Milchsäure, α-Hydroxycarbonsäuren, insbesondere Fruchtsäuren, insbesondere Äpfelsäure, Citronensäure, Fumarsäure, Gluconsäure, Glycolsäure, Mandelsäure, Milchsäure, Oxalsäure, Salicylsäure, α-Hydroxycaprylsäure und Weinsäure, β-Hydroxycarbonsäuren, insbesondere β-Hydroxybuttersäure und/oder Mevalonsäure, oder Gallussäure, 4-Hydroxybutansäure, Polyhydroxybuttersäure, Salicylsäure (2-Hydroxybenzoesäure), 4-Hydroxybenzoesäure (PHB) oder das Carboxylat von Hydroxycarbonsäure, Ester von Hydroxycarbonsäure, Ether von Carboxylat von Hydroxycarbonsäure auf mindestens einer der vorgenannten Hydroxysäuren basiert, und/oder die polymeren Verbindungen auf mindestens einer der Hydroxycarbonsäuren oder einem Gemisch enthaltend mindestens zwei der vorgenannten Verbindungen basiert.

Nach einer weiteren Alternative kann die Elektrolytzusammensetzung zusätzlich eine lineare oder verzweigte Polyalkylenoxid-Gruppen aufweisende Verbindung oder Gemische davon enthalten, wobei die Verbindung mindestens drei Alkylenoxid-Gruppen in der Verbindung aufweist, wobei die Alkylenoxid-Gruppen in der Polyalkylenoxid-Gruppen aufweisenden Verbindung ausgewählt sind aus Alkylenoxid-Gruppen mit 2 bis 6 C-Atomen je Alkylenoxid-Gruppe, und, wobei mindestens eine terminale Gruppe der Polyalkylenoxid-Gruppen aufweisenden Verbindung ausgewählt ist aus Hydroxy-Gruppen, Alkyl-Gruppen, Alkoxy-Gruppen, Alkenyl-Gruppen, Alkenyloxid-Gruppen, Carbonsäure-Gruppen, Carbonsäureester-Gruppen, insbesondere olefinischen Carbonsäureester-Gruppen, Carbonsäureamid-Gruppen, aromatischen-Gruppen, insbesondere Alkyl-substituierten aromatischen Gruppen, und/oder Gruppen enthaltend cyclische-Ether.

Nach einer Ausführungsform kann die Elektrolytzusammensetzung ein Gemisch von Hydroxycarbonsäure, Carboxylat einer Hydroxycarbonsäure, Ester einer Hydroxycarbonsäure, Ether eines Carboxylats einer Hydroxycarbonsäure, polymere Verbindungen basierend auf Hydroxycarbonsäuren, Carboxylaten von Hydroxycarbonsäure, Estern von Hydroxycarbonsäuren und mindestens einer linearen oder verzweigten Polyalkylenoxid-Gruppe(n) aufweisende Verbindung aufweisen.

Besonders bevorzugt sind lineare oder verzweigte Polyalkylenoxid-Gruppen aufweisende Verbindung mit mindestens drei bis 200 Alkylenoxid-Gruppen in der Verbindung oder Gemische von mindestens zwei dieser Verbindungen, insbesondere mit 3 bis 100 Alkylenoxid-Gruppen, besonders bevorzugt mit drei bis 100 Alkylenoxid-Gruppen, weiter bevorzugt mit 3 bis 50 Alkylenoxid-Gruppen, vorzugsweise mit 3 bis 25 Alkylenoxid-Gruppen. Dabei ist es weiter bevorzugt, wenn die Alkylenoxid-Gruppen aus Ethylenoxid und Propylenoxid ausgewählt sind.

Dabei können die Alkyl-Gruppen, Alkoxy-Gruppen, Alkenyl-Gruppen, Alkenyloxid-Gruppen, Carbonsäure-Gruppen, Carbonsäureamid-Gruppen, Carbonsäureester-Gruppen, insbesondere olefinischen Carbonsäureester-Gruppen, bevorzugt sind Fettsäuren, aromatischen-Gruppen, insbesondere Alkyl-substituierten aromatischen Gruppen, und/oder Gruppen enthaltend cyclische-Ether als mindestens eine terminale Gruppe und als mindestens eine weitere terminale Gruppe jeweils unabhängig umfassen 1 bis 35 C-Atome, insbesondere 2 bis 25 C-Atome. Alkyl-, Alkoxy-, Alkenyl-, Alkenyloxid und aromatische Gruppen optional Alkyl-substituiert umfassen vorzugsweise jeweils unabhängig 1 bis 18 C-Atome. Carbonsäureester sind vorzugsweise ausgewählt aus natürlichen Fettsäuren mit 4 bis 20 C-Atomen.

Bevorzugte Polyaklylenoxid-Gruppen, insbesondere umfassend Polyalkylenoxid-Gruppen, aufweisende Verbindungen können vorzugsweise ein Molekulargewicht von 100 g/mol bis 35.000 g/mol, bevorzugt 150 bis 1500 g/mol aufweisen. Dabei ist es weiter bevorzugt, wenn das mittlere Molekulargewicht von 200 g/mol bis 1500 g/mol beträgt.

Definitionsgemäß umfassen Polyalkylenoxid-Gruppen aufweisende Verbindung:

-(O-Alkylen)$_n$-OH, -(O-Alkylen)$_n$-COOH, -(O-Alkylen)$_n$-(C=O)NHR, -(O-Alkylen)$_n$-(C=O)NR$_2$, mit R = Kohlenwasserstoff oder Polyalkylenoxid,

-(O-Alkylen)$_n$-O-Alkyl, -(O-Alkylen)$_n$-O-Alkenyl,

-(O-Alkylen)$_n$-O-(C=O)-Alkyl, -(O-Alkylen)$_n$-O-(C=O)-Alkenyl,

-(O-Alkylen)$_n$-O-(C=O)-Aromat-Alkyl jeweils unabhängig mit n größer gleich 2, insbesondere mit n = 5 bis 100, insbesondere n = 5 bis 50, bevorzugt n = 5 bis 25.

Nach einer Ausführungsform können die Alkylenoxid-Gruppen in der Polyalkylenoxid-Gruppen aufweisenden Verbindung bevorzugt ausgewählt sein aus Alkylenoxid-Gruppen mit 2 bis 4 C-Atomen je Alkylenoxid-Gruppe. Des Weiteren ist es bevorzugt, wenn die Polyalkylenoxid-Gruppen aufweisenden Verbindungen mindestens fünf Alkylenoxid-Gruppen, insbesondere bis einhundert Alkylenoxid-Gruppen, mit 2 bis 4 C-Atomen je Alkylenoxid-Gruppe in der Verbindung aufweist.

Alkylen ist besonders bevorzugt bivalentes Ethylen (-CH$_2$CH$_2$-), insbesondere als Ethylenoxid-Gruppe, oder bivalentes Propylen, insbesondere in Propylenoxid-Gruppen (-CH$_2$(CH$_3$CH)- und -(CH$_2$)$_3$-).

Bevorzugte Beispiele können symmetrische Verbindungen umfassen, aber sind nicht beschränkt auf die nachfolgend genannten Polyalkylenoxid-Gruppen aufweisenden Verbindungen: H-(O-Alkylen)$_n$-OH, Alkyl-(O-Alkylen)$_n$-O-Alkyl, Alkenyl-(O-Alkylen)$_n$-O-Alkenyl, Alkyl-(C=O)-(O-Alkylen)$_n$-O-(C=O)-Alkyl, Alkenyl-(C=O)-(O-Alkylen)$_n$-O-(C=O)-Alkenyl, Alkyl-Aromat-(O-Alkylen)$_n$-O-(C=O)-Aromat-Alkyl, wobei n wie vorstehend definiert ist, vorzugsweise ist n größer gleich 2, bevorzugt ist n = 5 bis 50, insbesondere n = 5 bis 25, wobei jedes Alkylen jeweils unabhängig 2 bis 6 C-Atome umfasst und Alkyl und/oder Alkenyl jeweils unabhängig 1 bis 24 C-Atome umfassen, insbesondere 1 bis 20 C-Atome.

Bevorzugt sind die terminalen Gruppen der Polyalkylenoxid-Gruppen aufweisenden Verbindung ausgewählt aus Hydroxy-Gruppen, Alkyl-Gruppen, Alkoxy-Gruppen, Alkylen-Gruppen, Alkylenoxid-Gruppen, Carbonsäureester-Gruppen, insbesondere olefinische Carbonsäureester-Gruppen, aromatischen-Gruppen und/oder Gruppen enthaltend cyclische-Ether.

Nach einer bevorzugten Ausführungsform ist, die mindestens eine terminale Gruppe der Polyalkylenoxid-Gruppen aufweisenden Verbindung eine Hydroxy-Gruppe und mindestens eine weitere terminale Gruppe ist ausgewählt aus Hydroxy-Gruppen, Alkyl-Gruppen, Alkoxy-Gruppen, Alkenyl-Gruppen, Alkenyloxid-Gruppen, Carbonsäureester-Gruppen, aromatischen-Gruppen, insbesondere Alkyl-substituierten aromatischen Gruppen, und/oder Gruppen enthaltend cyclische-Ether. Dabei ist es weiter bevorzugt, wenn die linearen Verbindungen eine erste terminale und eine weitere terminale Gruppe aufweisen und verzweigte Verbindungen eine erste, eine weitere terminale Gruppe und mindestens eine zusätzliche terminale Gruppe aufweisen.

Nach einer besonders bevorzugten Ausführungsform können die Elektrolytzusammensetzungen zusätzlich umfassen mindestens eine Polyalkylenoxid-Gruppen aufweisende Verbindung mit mindestens einer cyclischen Ether-Gruppe mit 5 bis 8 C-Atomen und optional als mindestens eine terminale Gruppe einen Carbonsäureester, insbesondere einen Carbonsäureester einer Fettsäure, und, wobei die mindestens eine oder mehrere weiteren terminalen Gruppen ausgewählt sind aus Hydroxy-Gruppen, Alkyl-Gruppen, Alkoxy-Gruppen, Alkenyl-Gruppen, Alkenyloxid-Gruppen, Carbonsäureester-Gruppen, aromatischen-Gruppen und/oder Gruppen enthaltend cyclische-Ether mit 5 bis 8 C-Atomen. Besonders bevorzugt ist eine verzweigte Polyalkylenoxid-Gruppen aufweisende Verbindung mit ein bis sechs Polyalkylenoxid-Gruppen an der cyclischen Ether-Gruppe, und mindestens einem Alkylenoxidfunktionalisierten Fettsäureester. Typische Fettsäuren umfassen Ölsäure, Laurinsäure, Stearinsäure, Isostearinsäure und/oder Palmitinsäure. Besonders bevorzugte Verbindungen umfassen ethoxylierte Sorbitanfettsäureester, insbesondere Mono- bis Triester. Bevorzugt mit 2 bis 200 Ethoxy-Gruppen, insbesondere mit 2 bis 50 Ethoxy-Gruppen, und optional mit Propoxy-Gruppe(n) als Polyalkylenoxid-Gruppen.

Nach einer weiteren bevorzugten Ausführungsform kann eine wässrige, alkalische Elektrolytzusammensetzung zusätzlich verzweigte Polyalkylenoxid-Gruppen aufweisende Verbindungen aufweisen, die umfassen Ether von Kohlenhydraten, insbesondere Ether von Furanosen oder Pyranosen, die optional Carbonsäureester von Fettsäure aufweisen. Besonders bevorzugt sind Polyalkylenoxid-Gruppen enthaltende Verbindungen von SorbitanFettsäureester, wie Polyoxyethylen(20)sorbitanmonooleat (Tween 80). Gleichfalls geeignet können eine oder mehrere der folgenden Polysorbate in der Elektrolytzusammensetzung eingesetzt werden: Polysorbat 20 (Polyoxyethylen-(20)-sorbitanmonolaurat) (E 432), Polysorbat 21 (Polyoxyethylen-(4)-sorbitanmonolaurat), Polysorbat 40 (Polyoxyethylen-(20)-sorbitanmonopalmitat) (E 434), Polysorbat 60 (Polyoxyethylen-(20)-sorbitanmonostearat) (E 435), Polysorbat 61 (Polyoxyethylen-(4)-sorbitanmonostearat), Polysorbat 65 (Polyoxyethylen-(20)-sorbitantristearat) (E 436), Polysorbat 80 (Polyoxyethylen-(20)-sorbitanmonooleat) (E 433), Polysorbat 81 (Polyoxyethylen-(5)-sorbitanmonooleat), Polysorbat 85 (Polyoxyethylen-(20)-sorbitantrioleat), Polysorbat 120 (Polyoxyethylen-(20)-sorbitanmonoisostearat).

Besonders bevorzugte Elektrolytzusammensetzungen können umfassen Polyalkylenoxid-Gruppen aufweisende Verbindungen, die ausgewählt sind aus Polyethylenglycol, Polypropylenglycol, Propylenoxid und Ethylenoxid aufweisenden Polyalkylenoxid-Gruppen enthaltenden Verbindungen, wobei die terminalen Gruppen ausgewählt sind aus Hydroxy-Gruppen, Alkoxy-Gruppen, Alkyl-Gruppen, Alkenyl-Gruppen, Alkenyloxid-Gruppen, Alkylfunktionellen Carbonsäureester-Gruppen, Alkylen-funktionellen Carbonsäure-Gruppen, wobei die Alkoxy, Alkyl und Alkylen-Gruppen jeweils unabhängig 1 bis 24 C-Atome aufweisen.

Weitere besonders bevorzugte Polyalkylenoxid-Gruppen aufweisende Verbindungen können ausgewählt sein aus Verbindungen enthaltend Polyalkylenoxid-Gruppen aufweisende Furanosen, und/oder Polyalkylenoxid-Gruppen aufweisende Pyranosen, insbesondere Polyalkylenoxid-Gruppen aufweisende Verbindungen von Furanose-Fettsäureestern und/oder Polyalkylenoxid-Gruppen aufweisende Verbindungen von Pyranose-Fettsäureestern. Insbesondere sind die terminalen Gruppen der Polyalkylenoxid-Gruppen aufweisenden Verbindung ausgewählt aus Hydroxy-Gruppen, Alkyl-Gruppen, Alkoxy-Gruppen, Alkylen-Gruppen, Alkylenoxid-Gruppen, Carbonsäureester-Gruppen, aromatischen-Gruppen und/oder Gruppen enthaltend cyclische-Ether.

Weiter bevorzugt sind Polyalkylenoxid-Gruppen aufweisende Verbindungen von SorbitanFettsäureester umfassend Polyalkylenoxid-Gruppen aufweisende Verbindungen eines Sorbitanmonostearats, Sorbitantristearats, Sorbitanmonolaurats, Sorbitanmonooleats, Sorbitantrioleats und/oder Sorbitanmonopalmitats.

Entsprechend einer weiteren Ausführungsform ist es bevorzugt, wenn die Polyalkylenoxid-Gruppen aufweisende Verbindung umfasst mindestens eine cyclische Ether-Gruppe mit 5 bis 8 C-Atomen und optional als mindestens eine terminale Gruppe einen Carbonsäureester, insbesondere einer Fettsäure oder einer Fruchtsäure, bevorzugt einer Fettsäure, und, wobei die weiteren terminalen Gruppen ausgewählt sind aus Hydroxy-Gruppen, Alkyl-Gruppen, Alkoxy-Gruppen, Alkenyl-Gruppen, Alkenyloxid-Gruppen, Carbonsäureester-Gruppen, aromatischen-Gruppen, insbesondere Alkyl-funktionalisierte Phenyl-Gruppen, und/oder Gruppen enthaltend cyclische-Ether mit 5 bis 8 C-Atomen.

Eine besonders bevorzugte Verbindung ist ausgewählt aus 4-(1,1,3,3-Tetramethylbutyl)phenyl-polyethylenglycolen, bevorzugt 4-(1,1,3,3-Tetramethylbutyl)phenyl-polyethylenglycol, *t*-Octylphenoxypolyethoxyethanol, Polyethylene glycol tert-octylphenyl ether, mit n gleich 5 bis 100, bevorzugt mit n = 9 bis 10 (Triton X-100) oder n = 7 bis 8 (Triton X-114).

Ebenso Gegenstand der Erfindung ist eine Elektrolytzusammensetzung umfassend 2,0 bis 99,0 Gew.-% Wasser und 0,0001 bis 15 Gew.-% mindestens einer Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen, bevorzugt sind 0,01 bis 10 Gew.-%, besonders bevorzugt von 0,1 bis 2,5 Gew.-%, und

- einen Gehalt von 0,001 bis 40 Gew.-% Alkalihydroxid, insbesondere 10 bis 40 Gew.-%, und optional 0,0001 bis 15 Gew.-% Polyalkylenoxid-Gruppen aufweisende Verbindungen oder Gemische dieser, insbesondere 0,01 bis 2 Gew.-%,

in Bezug auf die Gesamtzusammensetzung von 100 Gew.-%. Optional kann die Elektrolytzusammensetzung Alkalisilikat enthalten, wobei der Gehalt vorzugsweise unter 4 Mol/Liter Alkalisilikat, bevorzugt von 0,001 bis 3,5 Mol/Liter Alkalisilikat beträgt, insbesondere in der Gesamtzusammensetzung von 100 Gew.-%.

Zur Herstellung der wässrigen Elektrolytzusammensetzung wird vorzugsweise destilliertes Wasser eingesetzt. Das Wasser zur Herstellung der Elektrolytzusammensetzung weist vorzugsweise bei 25 °C, eine Leitfähigkeit von größer gleich 0,055 μS/cm, weiter bevorzugt von größer gleich 0,5 μS/cm auf. In der Elektrolytzusammensetzung ist die Leitfähigkeit erheblich höher und liegt vorzugsweise bei größer gleich 1 mS/cm bei 25 °C, bevorzugt bei größer gleich 0,5 S/cm bei 25 °C.

Nach einer besonders bevorzugten Ausführungsform ist die Elektrolytzusammensetzung eine wässrige, alkalische Zusammensetzung umfassend Alkalihydroxid, insbesondere Kaliumhydroxid, und mindestens eine Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen. Dabei ist es bevorzugt, wenn der Gehalt des Alkalihydroxids von 0,001 bis 6 Mol/Liter, vorzugsweise von 1 bis 5,5 Mol/Liter in der wässrigen, alkalischen Elektrolytzusammensetzung beträgt.

Der Gehalt an Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen kann von der gewählten Elektrodenoberfläche sowie weiteren Verfahrensbedingungen wie Temperatur, Durchflussmenge in der Zelle, Porengröße der Elektrodenoberfläche etc. abhängen. Daher kann der Gehalt der mindestens einen Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen oder Gemische von mindestens zwei dieser Verbindungen von 0,000001 bis 50.000 ppm-Gew., insbesondere von 0,01 bis 20.000 ppm-Gew., bevorzugt von 0,01 ppm-Gew. bis 10.000 ppm-Gew., in der Elektrolytzusammensetzung, insbesondere mit einer Gesamtzusammensetzung von 100 Gew.-% betragen.

Weiter ist es bevorzugt, wenn die Elektrolytzusammensetzung eine Stoffmengenkonzentration von 1 bis 6 Mol/Liter Alkalihydroxid, insbesondere Kaliumhydroxid, und 10 ppm-Gew. bis 50.000 ppm-Gew. lineare oder verzweigte Polyalkylenoxid-Gruppen aufweisende Verbindungen mit mindestens drei Alkylenoxid-Gruppen in der Verbindung oder Gemische von mindestens zwei dieser Verbindungen in Wasser aufweist, wobei insbesondere die Gesamtzusammensetzung der Elektrolytzusammensetzung 100 Gew.-% beträgt. Bevorzugt ist die Polyalkylenoxid-Gruppen enthaltende Verbindung ausgewählt aus Polyethylenoxid-Gruppen, Polypropylenoxid-Gruppen, Polypropylenoxid- und Polyethylenoxid-Gruppen enthaltenden Verbindungen. In einer Alternative weist die Polyalkylenoxid-Gruppen aufweisende Verbindung mindestens einen cyclischen Ether auf.

Gleichfalls Gegenstand der Erfindung ist eine chemische Primärzelle aufweisend eine Anode, eine Kathode, einen Elektrolyten sowie mindestens einen Separator, wobei der Separator die Kathode und die Anode voneinander separiert, und die Kathode umfasst als Material Mangandioxid und optional Kohlenstoff enthaltenden Leitfähigkeitsvermittler, wobei die Anode als Anodenmaterial Silizium umfasst, und wobei das Silizium in Form von Silizium-Partikeln vorliegt. Die Siliziumpartikel weisen vorzugsweise eine Partikelgröße zwischen 10 nm bis 99000 nm auf. Nach einer Alternative sind die Siliziumpartikel kristallin, insbesondere sind die Siliziumpartikel polykristallin. Nach einer weiteren Alternative sind die Siliziumpartikel im Wesentlichen röntgenamorph. Ferner können Gemische von Siliziumpartikeln umfassend amorphe und kristalline Siliziumpartikel als Anodenmaterial eingesetzt werden.

Somit ist Gegenstand der Erfindung eine elektrochemische Primärzelle aufweisend eine Anode, eine Kathode sowie mindestens einen Separator und enthaltend eine erfindungsgemäße Elektrolytlösung, wobei der Separator die Kathode und die Anode voneinander separiert.

Nach einer bevorzugten Ausführungsform kann die Primärzelle mit einem hermetisch abgeschlossenen Gehäuse vorliegen, wobei i) das Material der Kathode der Primärzelle Mangandioxid und optional einen Kohlenstoff enthaltenden Leitfähigkeitsvermittler aufweist. Als ein hermetisch abgeschlossenes Gehäuse wird in der Regel ein Gehäuse verstanden, dass aus einem gegenüber alkalischen Elektrolyten inertem Material hergestellt ist und hermetisch, insbesondere fluiddicht (gas- und flüssigkeitsdicht) abgeschlossen ist. Als Material für das Gehäuse oder auch für den Separator kommen beispielsweise Polyetheretherketone, Polyaryletherketone, Polyphenylensulfid (PPS), Polyoxymethylen-Copolymere (POM-C), Polyamid, Cycloolefine oder andere Hyperformance Kunststoffe oder auch metallische Legierungen in Frage. Die Komponenten des Gehäuses können mittels Laser verschweißt oder mittels Plasmaverfahren verschweißt sein.

Die Kathode kann als Kohlenstoff geträgertes $MnO_2$ Komposit ausgeführt sein.

Der Separator kann mit einer Shut-down-Funktion ausgelegt sein, um einen Zutritt des Elektrolyten bei unerwünschten Verfahrensbedingungen von der Anode und/oder der Kathode zu unterbinden. Gleichfalls kann die Primärzelle eine Berstplatte aufweisen, um bei unerwünschtem Druckanstieg eine Explosion der Primärzelle zu vermeiden und den gezielten Austritt der Komponenten aus der Primärzelle bei Druckanstieg zu steuern.

Nach einer zweiten Alternative kann die Primärzelle als die Kathode ii) eine Luftkathode aufweisen. Das Material der Kathode in dieser Primärzelle umfasst vorzugsweise Mangandioxid und optional einen Kohlenstoff enthaltenden Leitfähigkeitsvermittler, insbesondere weist die Luftkathode eine für Kohlendioxid-undurchlässige Membran auf, die vorzugsweise in der Primärzelle so angeordnet ist, dass sie den Zutritt von Kohlendioxid aus der Umgebungsluft an die Kathode verhindert.

Gleichfalls bevorzugtes Metall-enthaltendes Anodenmaterial kann umfassen Silizium, bevorzugt Siliziumpartikel mit i) einem Gehalt an Eisen von größer gleich 0,02 mg/kg, bevorzugt größer gleich 0,05 mg/kg, und/oder ii) Silizium, bevorzugt Siliziumpartikel, mit Eisen-enthaltenden Partikeln, wobei die Eisen-enthaltenden Partikel mit einem Gehalt an Eisen von größer gleich 90 Gew.-% in Bezug auf die Gesamtzusammensetzung der Eisen-enthaltenden Partikel vorliegen, wobei die Eisen-enthaltenden Partikel vorzugsweise eine Edelstahllegierung umfassen. Die Eisen-enthaltenden Partikel mit einem Eisengehalt größer 90 % können aus einem Wafersägeprozess und der aufgearbeiteten Sägesuspension stammen oder aus einem Recyclingprozess z.B. von Solarsilizium. Ferner kann das Metall-enthaltende Anodenmaterial, insbesondere die Siliziumpartikel oder das Anodenmaterial Silizium bzw. die Silizium-Anode, einen Gehalt aufweisen an:- Eisen größer gleich 5 mg/kg,

- Aluminium größer gleich 0,5 mg/kg,
- Calcium größer gleich 5 mg/kg,
- optional Kalium größer gleich 5 mg/kg,
- optional Magnesium größer gleich 5 mg/kg,

- optional Zink größer gleich 50 mg/kg
- und optional Sauerstoff größer gleich 0,01 mg/kg,
- und optional Titan größer gleich 0,01 mg/kg,
- und optional Kupfer größer gleich 0,05 mg/kg, bevorzugt
- Eisen größer gleich 500 mg/kg,
- Aluminium größer gleich 0,5 mg/kg,
- Calcium größer gleich 50 mg/kg,
- Magnesium größer gleich 50 mg/kg,
- und optional Sauerstoff größer gleich 0,01 mg/kg,
- und optional Titan größer gleich 0,01 mg/kg,
- und optional Kupfer größer gleich 0,05 mg/kg.

Des Weiteren kann das Anodenmaterial zusätzlich oder alternativ Mangan umfassen, insbesondere bis zu 398 mg/kg, bevorzugt von 0,1 mg/kg bis zu 199 mg/kg. Das Mangan kann aus Siliciumcarbid, bspw. der Schleifkörpern oder anderen Quellen eingetragen werden. Es wird angenommen, dass das Mangan aufgrund seiner diversen stabilen Oxidationsstufen die Grenzflächenprozesse an der Anode positiv beeinflusst.

Ferner kann das Metall-enthaltende Anodenmaterial, insbesondere die Siliziumpartikel oder das Anodenmaterial Silizium bzw. die Silizium-Anode, einen Gehalt aufweisen an:

- Eisen größer gleich 5 mg/kg,
- Calcium größer gleich 5 mg/kg,
- Mangan größer gleich 0,1 mg/kg, insbesondere größer gleich 50 mg/kg optional bis 398 mg/kg
- und optional Sauerstoff größer gleich 0,01 mg/kg.

Des Weiteren kann das Anodenmaterial Mangan bis zu 398 mg/kg umfassen, bevorzugt von 0,1 mg/kg bis zu 199 mg/kg.

Ferner ist Gegenstand der Erfindung eine Primärzelle in der die Anode als Anodenmaterial Silizium umfasst, insbesondere wobei das Silizium in Form von Silizium-Partikeln vorliegt, und bevorzugt die Siliziumpartikel eine Partikelgröße zwischen 10 nm bis 99000 nm aufweisen. Die Siliziumpartikel können ausgewählt sein aus kristallinen, insbesondere polykristallin, und/oder amorphen Siliziumpartikeln. Nach einer bevorzugten Ausführungsform können Sägereste aus der Silizium-Waferherstellung, wie Wafern zur Herstellung von Halbleiter oder auch Reste aus der Herstellung von Solarsilizium-Wafern eingesetzt werden. Silizium aus recycelten Photvoltaikzellen, wobei Siliziumpartikel durch einen Mahlprozess gewonnen werden, bei dem in einem ersten Schritt das Siliziumkomposit gewonnen und danach vermahlen wurde. Per XRD-Analysen der Siliziumpartikel unter Verwendung der Scherrer-Gleichung ergeben sich im Fall polykristallinen Siliziums Kristallitgrößen größer gleich von 10nm. Alternativ sind die Siliziumpartikel im Wesentlichen amorph.

Vorzugsweise können die Silizium-Partikel und/oder die siliziumhaltigen Partikel als Mischung in Form von Agglomeraten von siliziumhaltigen Primärpartikeln, Aggregaten von Siliziumpartikeln oder Partikeln sowie als Gemisch dieser vorliegen, wobei die Agglomerate und/oder Aggregate eine Größe von 100 bis 3000 nm aufweisen. Die Partikel können eine Partikelgröße von 10 bis 99000 nm aufweisen.

Alternativ, bevorzugt umfasst die Anode zusätzlich als Anodenmaterial Silizium und Siliziumcarbid, wobei insbesondere das Silizium und/oder Siliciumcarbid in Form von Silizium-Partikeln vorliegt. Bevorzugt liegt das Silizium in Form von Partikeln einer Partikelgröße von 200 nm bis 20 Mikrometer, besonders bevorzugt mit einer Partikelgröße von 400 nm bis 8 Mikrometer vor. Das Siliciumcarbid liegt vorzugsweise in Form von Partikeln einer Partikelgröße von 1 Mikrometer bis 50 Mikrometer vor, bevorzugt von 7 Mikrometer bis 20 Mikrometer.

Nach einer bevorzugten Ausführungsform können Sägereste aus der Silizium-Waferherstellung, wie Wafern zur Herstellung von Halbleiter oder auch Reste aus der Herstellung von Solarsilizium-Wafern eingesetzt werden die vorzugsweise eine bimodale Partikelverteilung aufweisen mit Maxima beispielsweise bei 1000 und 10000 nm. Dabei ist es bevorzugt, wenn eine Fraktion der Siliziumpartikel eine Partikelgrößenverteilung von $d_{10}$ bis $d_{90}$ von 100 nm bis 9000 nm und eine zweite Fraktion Partikel von $d_{10}$ bis $d_{90}$ 6000 nm bis 45000 nm aufweist. Eine Partikelgrößenbestimmung kann mittels Laserbeugung nach ISO13320 (2009) erfolgen bspw. mit einem Mastersizer 2000 oder mittels TEM-Analyse sowie bspw. mittels Siebanalyse. XRD-Analysen der polykristallinen Siliziumpartikel unter Verwendung der Scherrer-Gleichung ergeben sich Kristallitgrößen größer gleich von 12 nm. Alternativ sind die Silizium-Primärpartikel im Wesentlichen amorph.

Ferner ist Gegenstand der Erfindung eine mehrzellige Batterie, wobei die Batterie mindestens zwei bis 15.000 miteinander verbundene Primärzellen umfasst, vorzugsweise sind davon die zwei bis 1.000 miteinander verbundenen Primärzellen in Serie geschaltet.

Ebenso Gegenstand der Erfindung ist die Verwendung mindestens einer Hydroxycarbonsäure, Carboxylate der Hydroxycarbonsäure, Ester der Hydroxycarbonsäure, Ether der Carboxylate der Hydroxycarbonsäure, polymere Verbindung basierend auf Hydroxycarbonsäure oder Gemische enthaltend mindestens zwei der vorgenannten Verbindungen als Additiv in einer Elektrolytzusammensetzung, insbesondere in einer wässrigen, alkalischen Elektrolytzusammensetzung, in einer elektrochemischen Primärzelle, insbesondere wobei die Anode der Primärzelle Silizium enthält das in Form von Silizium-Partikeln mit einer Partikelgröße zwischen 1 nm bis 99000 nm vorliegt. Dabei ist es bevorzugt, wenn in der Primärzelle als Anode Silizium in Form von kristallinen, wie polykristallinen, und/oder amorphen Silizium-Partikeln und optional Siliciumcarbid aufweist und optional polykristallines Silizium aufweist. Besonders bevorzugt sind Siliziumpartikel, insbesondere Partikel aus einem Mahlprozess, mit einer Partikelgröße zwischen 1 nm bis 99000 nm, die vorzugsweise mit einer Partikelgröße zwischen 500 nm und 30000 nm vorliegen. Die Partikel können zu einem Formkörper oder als Anode gesintert oder geschmolzen werden, wobei die Anode, insbesondere der Formkörper der Anode eine eingebettete Elektrode umfasst. Als eingebettet gilt eine Elektrode, die vorzugsweise vollständig vom Formkörper der Anode umhüllt ist und nur aus dem Formkörper als Kontakt zur Elektronenleitung hervortritt und insbesondere nicht an einer Position aus dem Formkörper ragt, die für den Kontakt mit einem Elektrolyten vorgesehen ist.

Gleichfalls Gegenstand der Erfindung ist die Verwendung von Siliziumpartikeln aus einem Wafersägeprozess in einer Primärzelle als Metall-enthaltendes Anodenmaterial und insbesondere zur Herstellung einer Anode umfassen eine Elektrode als Elektronenleiter. Die Siliziumpartikel aus dem Wafersägeprozess, synonym zu Sägeresten der Silizium-Waferherstellung, können von 1 bis 99,5 Gew.-%, bevorzugt von 20 bis 90 Gew.-%, des Anodenmaterials von insgesamt 100 Gew.-% betragen.

Gegenstand der Erfindung ist auch ein Anodenmaterial oder eine Anode umfassend Anodenmaterial, insbesondere ein Anodenmaterial oder eine Anode der elektrochemischen Primärzelle, wobei das Anodenmaterial Silizium umfasst, und wobei das Silizium in Form von Silizium-Partikeln vorliegt und die Silizium-Partikel einen Gehalt an Kohlenstoff von 10 Gew.-ppm bis 25 Gew.-%, insbesondere von 10 bis 20 Gew.-%, in Bezug auf die Gesamtzusammensetzung der Silizium-Partikel von 100 Gew.-% aufweisen und optional ein Teil der Silizium-Partikel oder die gesamten Silizium-Partikel als Sägereste aus einem Wafersägeprozess oder Recyclingprozess stammen.

Nach einer alternativen Ausführungsform liegt die Anode als dreidimensionaler Formkörper vor, wobei vorzugsweise in den Formkörper eine Elektrode als Elektronenleiter eingebettet ist, und insbesondere weist der Formkörper eine Dichte von 0,1 g/cm$^3$ bis 2,55 g/cm$^3$ auf, bevorzugt von 0,1 g/cm$^3$ bis 2,3 g/cm$^3$. Dabei ist es weiter bevorzugt, wenn der dreidimensionale Formkörper aus polykristallinem, mikroporösem Anodenmaterial gebildet ist, insbesondere umfasst er eine Elektrode als Elektronenleiter. Der dreidimensionale Formkörper wird vorteilhaft in einem Sinter- oder Schmelzverfahren aus Silizium-Partikeln und/oder Sägeresten der Silizium-Waferherstellung hergestellt.

Der dreidimensionale Formkörper kann ausgebildet sein als Platte, Tablette, Stab, Polyeder, Zylinder, Kugel, Gitter, eiförmig oder kann jegliche dreidimensionale Struktur ausbilden. Der Formkörper weist vorteilhaft entlang von drei senkrecht aufeinander stehenden, gedachten Achsen, die in den Formkörper gelegt sein könne, jeweils unabhängig für jede Achse mindestens 5 mm auf.

Des Weiteren ist es besonders bevorzugt, wenn die Elektrode ein metallisches Netz, ein Netz aus einer metallischen Legierung, eine Folie, eine Folie mit Ausnehmungen und/oder eine Membran ist, oder die Elektrode aus mindestens einem Metall oder einer Legierung gebildet ist und eine dendritische Form aufweist. Eine dentrische Form ist eine verzweigte und/oder verästelte Form. Die dentrische Form der Elektrode kann im Verfahren zur Herstellung der Anode in die Silizium-Partikel oder die Sägereste eingebettet werden, insbesondere in Schritt 2) oder 4). Bevorzugt ist der Formkörper eine Platte oder Zylinder mit einer Höhe von mindestens 1,5 mm, Breite von mindestens 1,5 mm und einer Dicke von mindestens 0,5 mm, besonders bevorzugt mit einer Höhe von mindestens 15 mm, Breite von mindestens 15 mm und einer Dicke von mindestens 0,5 mm.

Nach einer weiteren Ausführungsform umfasst das Anodenmaterial oder die Anode:

A) 35 bis 55 Gew.-% metallisches Silizium, insbesondere 35 bis 50 Gew.-% Silizium,

35 bis 55 Gew.-% Siliciumcarbid, insbesondere 40 bis 50 Gew.-% Siliciumcarbid,
1 bis 7,5 Gew.-% SiO$_2$, insbesondere 2 bis 5 Gew.-% SiO$_2$,
0,01 bis 7,5 Gew.-% Eisen, insbesondere 0,05 bis 6,5 Gew.-% Eisen,
optional 0,01 bis 2 Gew.-% Kupfer,
wobei die Gesamtzusammensetzung des Anodenmaterials 100 Gew.-% beträgt, oder

B) 75 bis 99,998 Gew.-% Silizium,

5 bis 24,999 Gew.-% Kohlenstoff,
0,001 bis 5 Gew.-% mindestens eines weiteren Metalls, insbesondere umfassend Eisen größer gleich 5 mg/kg, Calcium größer gleich 5 mg/kg, Mangan größer gleich 0,1 mg/kg, und 0 bis 5 Gew.-% Sauerstoff, insbesondere 0,001 bis 4 Gew.-% Sauerstoff,

wobei die Gesamtzusammensetzung des Anodenmaterials 100 Gew.-% beträgt.

Des Weiteren ist es bevorzugt, wenn die Anode einen dreidimensionalen Formkörper aus dem vorstehenden Anodenmaterial umfasst, wobei vorzugsweise im Formkörper eine Elektrode eingebettet ist. Das vorstehende Anodenmaterial kann vorteilhaft als Silizium-Partikeln und/oder Sägeresten aus der Silizium-Waferherstellung, insbesondere als Partikel mit bimodaler Partikelverteilung, in dem nachstehenden Verfahren zur Herstellung einer Anode eingesetzt werden.

Die Anode und/oder der Formkörper liegen vorzugsweise mit äußerer Oberfläche und innerer Oberfläche vor, wobei der dreidimensionale Formkörper Siliziumpartikel und Siliciumcarbidpartikel einer Partikelgröße von 1 nm bis 20 Mikrometer umfasst, und die Partikel an Kontaktpunkten zu benachbarten Partikeln stoffschlüssig miteinander verbunden sind, insbesondere umfassen die Kontaktpunkte Silizium und/oder Siliziumdioxid, wobei der dreidimensionale Formkörper vorzugsweise eine Dichte von 0,1 $g/cm^3$ bis 2,3 $g/cm^3$ aufweist.

Ein weiterer Gegenstand der Erfindung ist ein Verfahren zum Herstellen einer Silizium-Anode, aufweisend die Schritte

1) Bereitstellen von dotierten (p-Typ und n-Typ) oder undotierten Pulver-Substraten,

2) Aufschichten des Pulver-Substrate, wobei eine Schichtung erhalten wird,

3) Verdichten der Schichtung mittels Pressen und Heißsintern auf eine Dichte, wobei dann ein Umwandlungselement bzw. eine Anode erhalten wird.

Die im Schritt 3 erreichte Dichte und die elektrische Leitfähigkeit der Anode hängen in eindeutiger Weise mit dem verwendeten Material zusammen, was dem Fachmann durch bekannte Messverfahren leicht zugänglich ist und einfach gemessen werden kann.

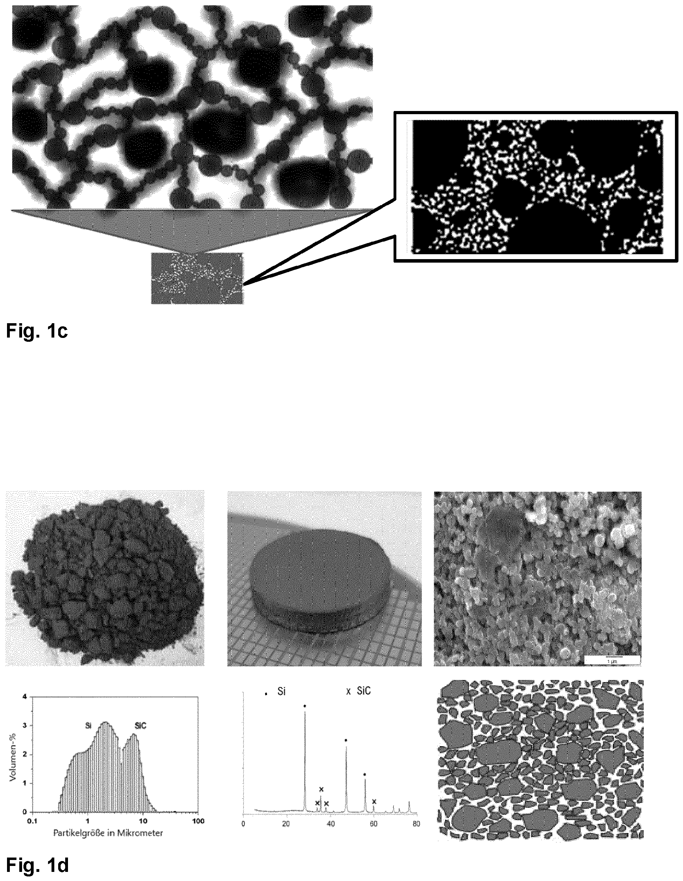

Den Vorgang des Pressens und Heißsinterns gemäß Schritt 3 (Übergang vom Zustand des siliziumhaltigen Pulvers zu der verdichteten Masse) zeigt **Figur 1c** schematisch. Die siliziumhaltigen Partikel (Primärpartikel, Aggregate, Agglomerate etc.), wobei der Begriff im Rahmen der Erfindung zum Begriff "Partikel" abgekürzt ist, werden erfindungsgemäß gepresst und heißgesintert und somit verdichtet. Wird beispielsweise Siliziumpulver erfindungsgemäß eingesetzt, ermöglicht der erfindungsgemäße Schritt 3 eine Erhöhung der Dichte von etwa 0,1 $g/cm^3$ auf bis zu 2,3 $g/cm^3$, also im Fall des Reinsilizium bis auf die Festkörper-Dichte. **Figur1c** zeigt beispielhaft Siliziumlegierungspulver nach dem Verdichten auf 90 % der theoretisch möglichen Festkörperdichte (hier im Fall Reinsilizium etwa 2,15 $g/cm^3$), verbunden mit einer hohen elektrischen Leitfähigkeit bzw. geringem elektrischen Widerstand.

Die im Schritt 3 erhaltene verdichtete Schichtung weist eine elektrische Leitfähigkeit auf, die anhand ihrer Dichte einstellbar ist. Diese Leitfähigkeit kann damit an die beim Einsatz des erfindungsgemäßen Umwandlungselementes erwartete Stromdichte bzw. -angebot angepasst sein.

Mit der Durchführung des erfindungsgemäßen Schrittes 3 ist also der elektrische Widerstand beeinflussbar. Der elektrische Widerstand wird außerdem durch die Länge und den Durchmesser der Kontaktzone zwischen den einzelnen Partikelaggregaten bestimmt. Auch hängt der elektrische Widerstand von der Zahl der Kontaktstellen je Partikelaggregat sowie die Zahl der Partikelaggregate je Raumvolumen ab.

Ein wichtiger Schlüsselprozess bei der Herstellung der Siliziumscheiben für die Halbleiterindustrie und die Photovoltaik ist das Drahtsägen, welches Bricks als Ausgangsmaterial nutzt. Beim Drahtsägeverfahren wird dabei zum überwiegenden Teil mit Metalldrähten und einer Siliziumkarbid-Suspension (Slurry), typischerweise basierend auf Siliziumkarbid (z.B. SiC F600) und Polyethylenglykol (z.B. PEG200), gesägt.

Aus Solarsilizium werden Siliziumingots produziert, aus denen nachfolgend dünne Siliziumscheiben, die sogenannten Wafer, gesägt werden. Die Herstellung der Wafer mit Dicken von ca. 200 μm erfolgt mit einem speziellen Drahtsägeverfahren (MWS: multi-wire slurry sawing). Während dieses Fertigungsschrittes gehen ca. 45 % des hochreinen Siliziums als feinste Sägespäne (Korngröße < 5 μm) in der Sägesuspension verloren.

Die Erfindung bezieht sich einerseits auf diese Siliziummaterial-Verluste, wie sie beispielhaft beim Herstellen von Siliziumscheiben entstehen. Eine Wiederverwendung ist wirtschaftlich äußerst interessant, da jährlich sehr große Mengen (über 70000 t/Jahr) an hochwertigem Silizium-Material in diesem Verfahrensschritt verlorengehen. Insbesondere beim Herstellen von Siliziumscheiben in der Photovoltaik ist das der Fall und wertvolles Siliziumpulver findet sich nachfolgend in der gebrauchten Sägesuspension wieder. Diese Suspension enthält zudem Polyethylenglykol (PEG, PEG200) als Kühlschmierstoff, Siliziumkarbid (SiC) als Schneidhilfsstoff und geringe Mengen an Diamantpartikel und erodiertes Eisen sowie weitere metallische Verunreinigungen aus dem Sägedraht. Stand der Technik ist die Rückgewinnung des groben SiC-Korns (> 5 μm) aus den Sägesuspensionen durch Aufarbeitung. Damit verbleibt gegen Ende des Säge-/Recyclingprozesses ein Koppel- bzw. Nebenprodukt, in dem das gesamte hochreine Silizium mit Resten an PEG, Fe, SiC und weitere metallischen Verunreinigungen enthalten sind. Ein beispielhafter Rückstand (trocken) enthält, wenn er zum Beispiel dem Slurry-Sägen entstammt, typischerweise ohne PEG rund 46 Gew.-% Silizium (Si), 44 Gew.-% Silizium-Kohlenstoff (SiC), 4 Gew.-% Silica (SiO$_2$), 5,5 Gew.-% Eisen (Fe), 0,4 Gew.-% Kupfer (Cu) und weniger als 500 Gew.-ppm Zink (Zn). Die Partikelgröße liegt für gewöhnlich zwischen 0,5 $\mu$m -15 $\mu$m, vorzugsweise zwischen 0,8 $\mu$m und 5 $\mu$m.

Die Reindichte des Materials wird mittels Helium-Pyknometer (Fa. Micromeretics) bestimmt und beträgt ca. 2,55 g/cm$^3$. Das Material besitzt eine durchschnittliche Restfeuchte von 12,5% vor der Weiterverarbeitung z.B. Trocknung usw..

Eine solche beispielhafte Mischung wird als "Rückstand aus der mechanischen Bearbeitung von Siliziumprodukten" bezeichnet und stellt ein konkretes mögliches Ausgangsmaterial für das nachfolgend beschriebene erfinderische Verfahren zur Nutzung dar.

Über diese relevante Quelle hinaus fallen generell "Rückstände aus der mechanischen Silizium-Bearbeitungen" unter die Erfindung. Ihnen ist gemeinsam, dass neben Siliziumpartikeln, Kohlenstoff und Metalle enthaltende Siliziumpartikel, wie zum Beispiel Siliziumcarbid und/oder metallhaltige oder metallische Partikel anfallen. Vorzugsweise beim künftig vermehrten Recyceln von Photovoltaik-Panels fällt Silizium in Form von Partikeln z.B. nach einer mechanischen Verarbeitung an.

Folglich ist Gegenstand der Erfindung auch ein Verfahren zur Herstellung einer Anode sowie eine Anode erhältlich nach dem Verfahren umfassend Metall-enthaltendes Anodenmaterial, das umfasst Silizium sowie Kohlenstoff und mindestens ein weiteres Metall, umfassend die Schritte

1) Bereitstellen von Silizium-Partikeln und/oder Sägeresten aus der Silizium-Waferherstellung, wobei die Sägereste insbesondere als Partikel mit bimodaler Partikelverteilung vorliegen, wie vorstehend offenbart,
2) optional Vorlegen einer Elektrode,
3) Überführen der Silizium-Partikel und/oder Sägereste aus der Silizium-Waferherstellung in eine Schichtung oder in eine Sinter- und/oder Schmelzform, optional mit eingebetteter Elektrode aus Schritt 2) oder
4) optional Einbetten einer Elektrode in die Schichtung oder Sinter- und/oder Schmelzform,
5) optional Verdichten der Silizium-Partikel und/der Sägereste mittels Pressen, und
6) Sintern oder Schmelzen der Silizium-Partikel und/oder Sägereste,
7) Abkühlen der gesinterten Silizium-Partikel und/oder Sägereste oder Abkühlen der Schmelze
8) Erhalten der Anode optional mit eingebetteter Elektrode.

Die Anode optional mit eingebetteter Elektrode weist vorzugsweise eine Dichte von 1 g/cm$^3$ bis 2,3 g/cm$^3$ auf. Das Pressen kann mit 1 MPa bis 500 MPa erfolgen. Das Sintern, insbesondere Plasma-Spark-Sintern, oder Schmelzen kann bei 650 bis 1750 °C erfolgen, vorzugsweise bei 850 °C bis 1450 °C.

Überraschenderweise haben die Erfinder gefunden, dass solche Siliziumpartikel als aktive Komponente in einer galvanischen Zelle verwendet werden können und in einer einzelnen spezifischen elektrochemischen Primärzelle nennenswerte Leistungsdichten bis unerwartet hohe Leistungsdichten von größer gleich 0,4 mW/cm$^2$ erzielt werden können. In den Versuchen mit Elektroruß oder elektrochemisch behandeltem bzw. hergestelltem Ruß und Leitruß konnten gute Leistungsdichten für Silizium enthaltende Primärzellen mit größer 3 mW/cm$^2$ erhalten werden.

Unter agglomerierten Silizium-Primärpartikeln oder Agglomeraten von Silizium werden erfindungsgemäß Siliziumpartikel kurz Partikel verstanden, die sich an den Flächen und an Ecken berühren. Agglomerate können beim Verarbeiten zu einer Anode bspw. durch Dispergieren in Aggregate und die Siliziumpartikel vorher zerkleinert werden. Unter Aggregaten werden zusammengewachsene, aneinander geschmolzene oder zusammengelagerte (Primär-) Partikel verstanden, die nur unter mechanischer Krafteinwirkung voneinander getrennt werden können. Vorzugsweise können den Partikeln bzw. dem Pulvergemenge zusätzlich bis zu 2 Gew.-% an Partikel bestehend aus und/oder umfassend mindestens eine Dotierkomponente zugegeben werden, die beim Heißverpressen und Sintern letztlich dem Silizium bzw. auf Mikroebene dem Partikel zulegiert werden. Dies hat den Vorteil, dass das Umwandlungs- bzw. Anodenelement dann einen reduzierten inneren Widerstand aufweisen kann. Des Weiteren findet man eine verbesserte Stromdichte der Anode.

Des Weiteren soll ein wirtschaftliches Kathodenmaterial bereitgestellt werden, das vorzugsweise eine physikalische Mischung von Mangandioxid (MnO$_2$) und einem Leitfähigkeitsvermittler umfasst. Der optionale Gehalt des Leitfähigkeitsvermittlers in den Elektroden der Primärzelle kann in der Kathode und in der Anode unterschiedlich hoch sein. Für Mangandioxid ist ein Gehalt an Leitfähigkeitsvermittler im Material der Kathode von circa 5 bis 65 Gew.-%, bevorzugt von 5 bis 15 Gew.-% üblich. Generell kann der Gehalt des Leitfähigkeitsvermittlers von 5 bis 60 Gew.-% im Material der Kathode betragen. Alternativ bevorzugt können Gehalte im Bereich von 15 bis 20 Gew.-% für einen geringeren Widerstand oder auch als Obergrenze von 30 bis 60 Gew.-% sein. Dabei beträgt das Material der Kathode in Summe immer 100 Gew.-%.

Gegenstand der Erfindung ist somit mindestens eine elektrochemische Primärzelle, welche eine Anode, eine Kathode, einen Elektrolyten sowie mindestens einen Separator aufweist, wobei der Separator die Kathode und die Anode voneinander separiert, und die Kathode umfasst als Material Mangandioxid und optional einen Kohlenstoff enthaltenden Leitfähigkeitsvermittler, wobei die Anode als Anodenmaterial Silizium umfasst und, wobei das Silizium in Form von Silizium-Partikeln vorliegt und dabei die Silizium-Primärpartikel eine Partikelgröße zwischen 1 nm bis 30000 nm aufweisen, und die Primärpartikel optional im Wesentlichen amorph sind. Dabei ist es besonders bevorzugt, wenn die Silizium-Partikel, und insbesondere die Silizium-Primärpartikel eine Kristallinität von größer gleich 2 % aufweisen, insbesondere eine Kristallinität größer gleich 12 % aufweisen. Silizium-Primärpartikel mit einer Kristallinität unter 12 %, vorzugsweise unter 2 % gelten als amorph.

Vorzugsweise liegen die Silizium-Partikel in der Anode als Aggregate vor und optional ist der Gehalt an Lithium kleiner gleich 0,1 Gew.-% in Bezug auf den Siliziumgehalt der Anode von 100 Gew.-% der Primärzelle, wobei der Gehalt an Lithium bevorzugt im geladenen Zustand der Primärzelle kleiner gleich 0,1 Gew.-% beträgt.

Siliziumpartikel eines trockenen, PEG-befreiten Rückstands aus dem Slurrysägen eignet sich besonders für die Herstellung eines Umwandlungs-/Anodenelements. Die vom Wafersägen herrührenden Masse weist die Partikelgrößenverteilung im Bereich von 0,5 $\mu$m bis 3 $\mu$m sowie im Bereich von 9 $\mu$m bis 13 $\mu$m jeweils ein Maximum auf. Die beiden Maxima lassen sich dem sehr feinen Siliziumabrieb mit < 3 $\mu$m und der Bereich mit von 9 $\mu$m bis15 $\mu$m z.B. SiC-Schneidkörnern zuordnen. Diese Masse aus Siliziumpartikel wurde zu einer Siliziumpulverschüttung mit einer Dichte zwischen 1 g/cm$^3$ und 1,5 g/cm$^3$, einem Durchmesser von ca. 24 mm und einer Schütthöhe von 3 mm in einer Heißsintervorrichtung zubereitet. Dabei wurde beispielhaft eine Netzelektrode, insbesondere Eisen-Netzelektrode, in das Pulver der tiegelartigen Form mit eingebettet. Das Pulverbett wurde in einem SPS-Ofen (elektrischer Sparksinter-Ofen) platziert und einer Druck-Strom-Wärmebehandlung beispielsweise zwischen 700-1350 °C unter Druck zwischen 100 und 300 bar abs für etwa 0,5-2 Stunden unterzogen, um das Umwandlungselement/Siliziumanode zu erhalten. Die Partikel mit der Netzelektrode wurden so in ein Siliziumplättchen mit kristalliner-mikroporöser Struktur umgewandelt.

Der Kristallinitätsgrad des Siliziummaterials oder prozessierten Siliziumanode kann mittels XRPD ermittelt werden: über die Formel % Kristallinität = (100 x A)/(A + B -C) mit A = gesamte Peakfläche der Reflexe der kristallinen Bestandteile des Diffraktogramms; B = gesamte Fläche unterhalb der Peakfläche A; C = luftstreuend-, fluoreszierend- und gerätebedingte Untergrundfläche. Peakfläche A mit Untergrund ist dabei genau unterhalb der schmalen Reflexe der Si-Phase. Die Untergrundfläche C wurde anhand der XRD-Diagramme des Si-Referenzstandards NIST 640 (Si-Standard = 100 % Kristallinität) ermittelt. Fläche B entspricht einem eingelegten Untergrundverlauf sowie dem konstanten Untergrund C. Berechnung (HighScore Plus Software). Der Si-Standard (Standard Reference Material 640d for X-Ray Metrology, David R. Black, Donald Windover, Albert Henins, David Gil, James Filliben and James P. Cline; National Institute of Standards and Technology, Gaithersburg, MD, 20899).

In röntgenamorphen Pulvern gibt es im XRPD keine scharfen, sondern nur wenige diffuse Interferenzen bei kleinen Beugungswinkeln. Stoffe mit einem derartigen Röntgenbeugungsdiagramm bezeichnet man als *röntgenamorph*. Kristallin: Kristall ist ein anisotroper, homogener Körper, der eine dreidimensional periodische Anordnung der Bausteine besitzt und ein XRPD mit klar definierten auflösbaren Reflexen besitzt.

Gleichfalls Gegenstand der Erfindung sind Primärzellen, in denen das Anodenmaterial Silizium-Partikel umfassend Silizium-Primärpartikel, Agglomerate aus Silizium-Primärpartikeln, Aggregate aus Silizium-Primärpartikeln und/oder Gemische davon umfasst, wobei insbesondere die Agglomerate und/oder Aggregate eine Größe von 10 nm bis 100 $\mu$m (Mikrometer) aufweisen. Bevorzugt sind Agglomerate und/oder Aggregate im Bereich von 100 nm bis 50 Mikrometer, insbesondere von 200 nm bis 10 Mikrometer, bevorzugt von 300 nm bis 1,5 Mikrometer und/oder von 400 nm bis 1 Mikrometer. Zugleich können die Silizium-Primärpartikel eine Partikelgrößenverteilung von 1 nm bis 15 nm, insbesondere von 15nm bis 300 nm oder von 300 nm bis 30000 nm aufweisen, wie sie z.B. aus einem Mahlprozess zum Recycling von Photovoltaik-Silizium gewonnen werden. Ferner könne die Partikel und/oder Siliziumpartikel zu Anoden optional mit Ableitgitter verdichtet werden.

Im Fall pulverförmigen Elektroden werden Batterieseparatoren zum Trennen einer negativen Elektrode von einer positiven Elektrode verwendet, wenn sie in einem geeigneten Elektrolyten angeordnet sind. Neben der Trennung der Elektroden weist der Separator während des Betriebs der Zelle, sofern die normalen chemischen Reaktionen ablaufen, einen verhältnismäßig niedrigen Widerstand gegenüber der Elektrolytionenübertragung, jedoch einen beträchtlich hohen Widerstand gegenüber der Elektrodenionenübertragung auf.

Der Separator wird beispielsweise gebildet durch Aufbringen eines verbesserten Coatings. Bei dem Separator handelt es sich in der Regel um ein flexibles, faseriges und poröses Substrat, das gegen starkes Alkali und gegen Oxidation beständig ist. Der Separator kann ein Composite sein und kann vorzugsweise auf mindestens einem Polymer, wie Polyethylen, Polypropylen, Polyacrylat, PEEK (Polyetheretherketon), PEAK (Polyetheraryletherketon), PEEK/PEDEK (Polyetheretherketon, Polyetherdiphenyletherketon), Lingnocellulose, Cellulose und/oder Mikrozellulose basieren.

Es ist bevorzugt, dass das pulverförmiges Anodenmaterial Siliziumpartikel sowie einen Leitfähigkeitsvermittler umfasst, insbesondere umfasst der Leitfähigkeitsvermittler Kohlenstoff enthaltende Partikel oder eine Kohlenstoff enthaltende Paste, wie elektrisch leitfähige organische Polymere. Ein besonders bevorzugtes Anodenmaterial der Anode umfasst zu 10 bis

100,00 Gew.-%, insbesondere von 5 bis 90 Gew.-%, bevorzugt von 10 bis 95 Gew.-% Silizium-Partikel und einen Kohlenstoff enthaltenden Leitfähigkeitsvermittler, insbesondere von 5 bis 90 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm.

Bevorzugt ist ebenfalls ein Anodenmaterial der Anode umfassend zu 20 bis 75 Gew.-%, vorzugsweise von 20 bis 60 Gew.-%, Siliziumpartikel und einen Kohlenstoff enthaltenden Leitfähigkeitsvermittler, insbesondere von 25 bis 80 Gew.-%, bevorzugt von 40 bis 80 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm. Ein besonders bevorzugtes Anodenmaterial der Anode umfasst zu 45 bis 55 Gew.-% Silizium-Partikel und zu 55 bis 45 Gew.-% einen Kohlenstoff enthaltenden Leitfähigkeitsvermittler, wobei die Gesamtzusammensetzung des Anodenmaterials 100 Gew.-%, d.h. ohne Elektrolyt und/oder getrocknet, beträgt.

Entsprechend zwei alternativen besonders bevorzugten Ausführungsformen umfasst die Kathode der Primärzelle a) als Material Mangandioxid als Kathodenmaterial, oder b) die Kathode der Primärzelle ist eine Luftkathode und die Kathode umfasst Manganoxid, insbesondere Manganoxid und Mangandioxid, Platin, Platin-Basis, Nickel-Kobalt-Cyanide, oder Silber als Katalysator im Kathodenmaterial.

Nickel-Kobalt-Cyanide stehen beispielhaft für die Klasse von Nichtedelmetallkatalysatoren mit hervorragender Elektroaktivität für die Sauerstoffreduktionsreaktion im neutralen Elektrolyten. Die Zubereitung der Ni/Co-dotierten C-N-Hohl-Nanoröhren-Verbundkatalysatoren (C-N, Co/C-N, Ni/C-N und Ni-Co/C-N) erfolgt durch eine einfache Pyrolyse des Ni/Co-Salz~Dicyandiamid~Glucose~Gemenges. Eine entsprechende Silizium-Luft-Batterie wurde in einem neutralen Medium unter Verwendung der vorbereiteten Probe als Katalysator für die Luftelektrode montiert und zeigte eine hervorragende Entladungsleistung und Stabilität.

Die Kathode umfasst vorzugsweise als Material, d.h. als Kathodenmaterial oder als Katalysator im Kathodenmaterial zur Beschleunigung der Löslichkeit von Sauerstoff, Mangandioxid. Ein bevorzugtes Kathodenmaterial für eine Kathode in einer Primärzelle mit Luftkathode umfasst vorzugsweise Manganoxid, insbesondere Manganoxid und/oder Mangandioxid, und Silber als Katalysator. Ein besonders bevorzugtes Kathodenmaterial, insbesondere für eine Primärzelle mit Luftkathode, weist eine hydrophobe Kathode auf, deren Kathodenmaterial eine Mischung aus Mangan(di)oxid, vorzugsweise einer durchschnittlichen Partikelgröße von kleiner gleich 10 $\mu$m (Mikrometer), insbesondere elektrolytisches Gamma-Mangandioxid, einen Leitfähigkeitsvermittler und einen polymeren halogenierten Kohlenwasserstoff, insbesondere einen polymeren fluorierten Kohlenwasserstoff, umfasst, insbesondere einen Polytetrafluorethylen. Die Mischung kann in Platten gepresst, getrocknet werden. Dabei wird vorzugsweise in der Primärzelle auf die der Luft ausgesetzten Kathodenseite ein mikroporöser, hydrophober Film, beispielsweise aus einem polymeren fluorierten Kohlenwasserstoff, aufgebracht.

Die Kathode in einer vorzugsweise hermetisch geschlossenen Primärzelle umfasst besonders bevorzugt Kathodenmaterial mit 75 bis 85 Gew.-% Mangandioxid und mit 15 bis 25 Gew.-% einen Kohlenstoff enthaltenden Leitfähigkeitsvermittler, wobei die Gesamtzusammensetzung des Kathodenmaterials 100 Gew.-% (Kathodenmaterial ohne Elektrolyt und/oder getrocknet) beträgt.

Der Kohlenstoff enthaltende Leitfähigkeitsvermittler umfasst vorzugsweise Kohlenstoff enthaltende Partikel, besonders bevorzugt Graphen enthaltende Partikel. Die Kohlenstoffpartikel weisen vorzugsweise eine Partikelgrößenverteilung im Bereich von 0,1 nm bis 5 Mikrometer, bevorzugt von 5 nm bis 3 Mikrometer auf. Dabei ist es weiter bevorzugt, wenn die Kohlenstoffpartikel eine Partikelgröße im Bereich von 5 nm bis 300 nm, insbesondere von 10 nm bis 150 nm, besonders bevorzugt von 20 bis 100 nm aufweisen und optional als Agglomerate einer Größe von 100 nm bis 3 Mikrometer, vorzugsweise einer Größe von 300 nm bis 2 Mikrometer vorliegen.

Entsprechend einer bevorzugten Ausführungsvariante umfasst das Silizium, insbesondere die Siliziumpartikel, bevorzugt die amorphen Silizium-Partikel, des Anodenmaterials Dotierstoffe, wobei die Dotierstoffe ausgewählt sind aus Elementen der 13. Hauptgruppe, insbesondere umfassend Bor, Indium, Aluminium und/oder Gallium, und aus Elementen der 15.

Hauptgruppe, insbesondere umfassend Phosphor, Arsen und/oder Antimon sowie Elemente der Eisengruppe, besonders bevorzugt sind Bor, Aluminium, Phosphor und/oder Eisen. Die Elemente der 13. Hauptgruppe (neue Nomenklatur: Gruppe 13 des Periodensystems) sind Elektronen-Akzeptoren neuer Nomenklatur. Als Elektronen-Donatoren werden Elemente der 15. Hauptgruppe (neue Nomenklatur: Gruppe 15 des Periodensystems) eingesetzt. Optional beinhalten die genannten Dotierstoffe wie auch das Silizium auch ihre Modifikationen mit Kohlenstoff.

Nach einer Ausführungsform umfasst das Silizium, insbesondere die Siliziumpartikel des Anodenmaterials, Dotierstoffe, wobei die Dotierstoffe zu größer gleich 1 Element der 15. Hauptgruppe auf $10^6$ Silizium-Atome und/oder größer gleich 1 Element der 13. Hauptgruppe auf $10^6$ Silizium-Atome vorliegen, insbesondere größer gleich 1 Element der 15. Hauptgruppe auf $10^4$ Silizium-Atome und/oder größer gleich 1 Element der 13. Hauptgruppe auf $10^4$ Silizium-Atome, bestimmt mittels dem Fachmann bekannter ICP-MS Analyse (Inductive Plasma Discharge-Massenspektroskopie, welche unter Wikipedia ausführlich beschrieben ist: https://de.wikipedia.org/wiki/Massenspektrometrie_mit_induktiv_gekoppeltem_Plasma). Alternativ kann die Analyse auch durch GD-MS erfolgen (GDMS/GD-MS-Glimmentladungs-Massenspektroskopie mit Secondary Electron Multiplier- (SEM) und/oder Faraday-Detector gemäß Quelle:https://assets.thermofisher.com/TFS-Assets/CMD/brochures/BR-30066-GD-MS-ELEMENT-GD-PLUS-BR30066-EN.pdf). Den Farady-Detektor vorzugsweise für die Messungen von Spuren-Konzentrationen im %-Bereich.

Nach einer alternativen, bevorzugten Ausführungsform umfasst das Silizium, insbesondere die mikrokristallinen Silizium-Partikel für das Anodenmaterial, das vorzugsweise aus einem Recyclingprozess stammt, Dotierstoffe bzw. mindestens ein weiteres Metall, wobei in Summe metallische Dotierstoffe größer gleich 1 Atom (ca. 1 Gew.-ppm, abhängig von Atomgewicht des Dotierstoffes) auf $10^6$ Silizium-Atome vorliegen. Metallische Dotierstoffe umfassen neben den zuvor genannten Li, Be, B, Na, Mg, Al, K, Ca, Sc, Ti, V, Cr, Mn, Fe, Co, Ni, Cu, Zn, Ga, Rb, Sr, Y, Zr, Nb, Mo, Tc, Ru, Rh, Pd, Ag, Cd, In, Sn, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Tl, Pb, Bi, Po, fr, Ac, U. Die vorstehende Bezeichnung Dotierstoffe wird synonym zu mindestens ein weiteres Metall verwendet.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich $2*10^3$ Atome auf $10^6$ Silizium-Atome vorliegen. Die vorstehenden Gehalte an Dotierstoffen im Silizium des Anodenmaterials können inhomogen im Silizium verteilt sein, sowie die Gehalte integral über die Gesamtmenge des Siliziums im Anodenmaterial im Mittel vorliegen. Zur Bestimmung obiger Gehalte wird eine Prüfmenge von 1 g Prüfmenge mittels GD-MS oder ICPMS vermessen, wobei zwischen beiden Methoden gewisse Abweichungen bestimmt werden können, vorzugsweise wird ein Mittelwert bestimmt. Entsprechend weiteren bevorzugten, alternativen Ausführungsformen umfasst das Silizium, insbesondere die mikrokristallinen Siliziumpartikel, des Anodenmaterials Dotierstoffe, wobei die Dotierstoffe größer gleich $10^4$ Atome auf $10^6$ Silizium-Atome und/oder größer gleich $10^5$ Atome auf $10^6$ Silizium-Atome betragen.

Nach weiteren bevorzugten, alternativen Ausführungsformen umfasst das Silizium, insbesondere die amorphen Silizium-Partikel des Anodenmaterials Dotierstoffe, wobei die Dotierstoffe neben jenen aus der 15 Hauptgruppe auch Lithium, Kalium Natrium umfassen, und deren Konzentration bis zu $5*10^{20}$ Atome je $cm^3$ erreicht.

Die Silizium-Partikel können auf atomarer Ebene eine Legierung von Silizium mit mindestens einem Dotierelement aufweisen vorzugsweise aus der 13. oder 15 Hauptgruppe, wobei das mindestens eine Dotierelement mit größer gleich $10^{21}$ Atomen/$cm^3$ ausgewählt aus mindestens einem Elektronendonator oder Elektronenakzeptor vorliegt. Dabei liegt die Legierung von Silizium auf atomarer Ebene mit mindestens einem Element der 13. oder 15. Hauptgruppe als eine amorphe oder kristalline Phase vor. Besonders bevorzugt weisen die Siliziumpartikel einen Gehalt an Bor von 1 ppm-Gew bis 2,5 Gew.-% in Bezug auf den Gesamtgehalt von 100 Gew.-% des Siliziumpartikels auf, bevorzugt ist ein Gehalt von 10 ppm-Gew bis 1,8, besonders bevorzugt von 1,8 Gew.-% plus/minus 0,2 Gew.-%. Analog kann die Siliziumschicht (z.B. Siliziumfolie) einen Gehalt an Dotierstoffen von 100 ppm-Gew bis 4,8 Gew.-% in Bezug auf den Gesamtgehalt von 100 Gew.-% der Siliziumschicht aufweisen.

Gegenstand der Erfindung ist eine Primärzelle umfassend Silizium-Partikel, die einen Gehalt an Bor von 10 Gew.-ppm bis 2,5 Gew.-% aufweist.

Zur Herstellung einer Anode oder Kathode werden jeweils ein Leitfähigkeitsvermittler sowie Siliziumpartikel zur Herstellung der Anode und Mangandioxid zur Herstellung der Kathode und optional ein Bindemittel, wie ein polymerer fluorierter Kohlenwasserstoff, gemischt und optional getrocknet. Vorzugsweise wird eine homogene Partikelgröße von kleiner gleich 10 Mikrometer und größer als 5 nm eingestellt und die Mischung zu einer Anode(nplatte) oder Kathode(nplatte) verpresst.

Nach einer weiteren Alternative weist die Primärzelle im Bereich der Luftkathode einen Lufteinlass auf, der eine Gas durchlässige Membran sein kann. Geeignete Membranen sind Membranen aus einem inerten Polymer, bevorzugt aus einem Polyfluorpolyethylen, Polyfluorpolypropylen oder Co-Polymeren davon. Der Aufbau der Luftkathode ist in der Regel eine Sandwichbauweise umfassend eine gasdurchlässige Membran, ein metallisches Netz zur Stromleitung und mindestens einen Katalysator, insbesondere einen porösen Katalysator. Die gasdurchlässige Membran ist vorzugsweise für Kohlendioxid undurchlässig und für Sauerstoff und optional Stickstoff durchlässig.

Nach einer weiteren Ausführungsform ist es bevorzugt, wenn die Primärpartikel der Silizium-Partikel Agglomerate und/oder Aggregate oder Gemische davon bilden und vorzugsweise in einem porösen Silizium-Netzwerk angeordnet sein können, insbesondere können die Agglomerate, Aggregate oder Gemische dieser mechanisch zu einem porösen Silizium-Netzwerk verhakt sein. Insoweit kann das Anodenmaterial besonders bevorzugt ein poröses Silizium-Netzwerk aus Silizium-Primärpartikeln, Agglomeraten aus Silizium-Primärpartikeln, Aggregaten aus Silizium-Primärpartikeln und/oder Gemischen davon sein. Dieses Silizium-Partikel-Netzwerk kann in einer bevorzugten Variante eine Netzelektrode einbetten und damit verdichtet , vorzugsweise versintert sein.

Dabei ist es besonders bevorzugt, wenn die Silizium-Partikel, insbesondere die kleinen Silizium-Primärpartikel, im Wesentlichen amorph (röntgenamorph) sind, da auf diese Weise sichergestellt wird, dass bspw. beim Verpressen und/oder versintern der Partikel zu einer Anode beim Betrieb in einem Elektrolyten eine gleichmäßige chemische Umsetzung der Silizium-Partikel gewährleistet ist. Bei makroskopisch kristallinem Siliziumpartikel mit einer Größe über 30 Mikrometer würde die Auflösung im Elektrolyten überwiegend anisotrop erfolgen. Amorphes Silizium wird isotrop aufgelöst, so dass amorphes Silizium oder eine Mischung mit mikrokristallinem Siliziumpartikeln eine höhere Energiedichte liefern kann. Beispielsweise ist in alkalischen Ätzmitteln die Ätzrate für die (111)-Richtungen eines Siliziumkristalls ungefähr zwei Größenordnungen kleiner als die jeder anderen Richtung. Die (100)-orientierten Flächen des Siliziumkristalls werden anderthalb mal so schnell geätzt wie die (110)-orientierten Flächen. Gleichfalls können dotierte, amorphe Silizium-Partikel eingesetzt werden.

Ist die Dotierung von p-Typ oder enthalten die Silizium-Partikeln weitere metallische Dotierelemente größer als > $10^{19}$ je cm$^3$, dann wird die Ätzrate herabgesetzt, da gilt, je höher die Dotierrate desto geringer die Ätzrate. Insofern ist über die Dotierung vorzugsweise in mikrokristallinen Silizium-Partikeln die Leistungsdichte auch über die Ätzrate einstellbar.

Dotierungen können bei der Partikelherstellung, bevorzugt bei der Herstellung amorpher Siliziumpartikel, vorgenommen werden. Unter amorphen Siliziumpartikeln werden Silizium-Primärpartikel, in der Regel in Form eines Pulvers oder in einer festen Zusammensetzung verstanden, die (Silizium-Primärpartikel) röntgenamorph vorliegen und optional partikulärdispers in eine Hilfsstoffmatrix z.B. Ruß eingebettet sein können. Dabei bedeutet Röntgenamorph, dass dem Röntgensignal" entsprechend den Haupt-Peaks: 28.5° (111) 47.4°(220) 56.0° (311) 69.4° (400) maximal weniger als 10% der Signalamplituden bezogen auf die fcc Structure des Siliziums (JCPDS card: 00-027-1402) erreichen.

Erfindungsgemäßes Anodenmaterial vermeidet Silicide. Unter Siliciden werden intermetallische Verbindungen mit einem stöchiometrischen Anteil an mindestens einem zweiten Metall verstanden. Silicide weisen eine homogene chemische Verbindung aus zwei oder mehr Metallen mit Gitterstrukturen, die sich von denen der konstituierenden Metalle unterscheiden, auf. Des Weiteren weist das Anodenmaterial keine klassische Legierung aus mindestens zwei Elementen auf, die gemeinsam das metalltypische Merkmal des kristallinen Aufbaus mit Metallbindung aufweisen, da die Silizium-Partikel vorzugsweise im Wesentlichen röntgenamorph und/oder mikrokristallin sind.

Die erfindungsgemäße elektrochemische Primärzelle ist keine Lithium-Ionen Batterie. Des Weiteren umfasst das Anodenmaterial keine Lithium-Interkalationsverbindung. Erfindungsgemäß umfasst das Kathodenmaterial kein Lithium-Metalloxid. Ebenso umfasst die Primärzelle keine Lithium-Interkalationsverbindung.

Die Siliziumpartikel können auf atomarer Ebene eine Legierung von Silizium mit mindestens einem Dotierelement aufweisen, wobei das mindestens eine Element mit bis zu 5*$10^{21}$ Atomen/cm$^3$ ausgewählt aus mindestens einem Elektronendonator und/oder Elektronenakzeptor vorliegt. Dabei liegt die Legierung von Silizium auf atomarer Ebene mit mindestens einem Element vorzugsweise als eine amorphe Phase vor.

Entsprechend einer Ausführungsform weisen die Silizium-Primärpartikel im Wesentlichen eine Partikelgröße von 5 bis 500 nm auf, insbesondere von 5 bis 20 nm, vorzugsweise von 5 bis 15 nm, oder in ebenso bevorzugten Alternativen weisen die Silizium-Primärpartikel Partikelgrößen von 20 bis 200 nm oder von 70 bis 950 nm, insbesondere von 100 bis 500 nm auf.

Ferner ist es bevorzugt, wenn die Siliziumpartikel in Form von Agglomeraten und/oder Aggregaten aus den Primärpartikeln vorliegen, wobei die Agglomerate und/oder Aggregate eine Partikelgröße von 100 nm bis 3 μm aufweisen, insbesondere von 100 nm bis 2000 nm, bevorzugt von 150 bis 1000 nm oder von 400 bis 1000 nm. Die vorgenannten Anordnungen können auch als Nanodrähte oder Nanonetzwerk angesehen werden. In einer weiteren Alternative liegen die Siliziumpartikel im Wesentlichen in Form von Silizium-Primärpartikeln, Agglomeraten und/oder Aggregaten von Silizium-Primärpartikeln oder Gemischen dieser vor, wobei die Siliziumpartikel, Agglomerate und/oder Aggregate eine Größe von 100 nm bis 30000 nm aufweisen, insbesondere von 100 nm bis 5000 nm, vorzugsweise von 100 nm bis 1500 nm, weiter bevorzugt sind 150 bis 1000 nm, 400 nm bis 1000 nm oder 200 nm bis 2000 nm.

Die erfindungsgemäßen Siliziumpartikel weisen vorzugsweise eine Oberfläche von 0,001 bis 300 m$^2$/g, vorzugsweise von 0,1 bis 300 m$^2$/g, vorzugsweise 0,1 bis 100 m$^2$/g auf, insbesondere von 1 - 50 m$^2$/g im Fall von Siliziumpartikel aus einem Recyclingprozess. In einer Varinate haben die Aggregate und Agglomerate eine Primärpartikelgröße von etwa 10 nm im Mittel mit plus/minus 9 nm. Des Weiteren beträgt vorzugsweise die Oberfläche der Siliziumpartikel, der Agglomerate und/oder der Aggregate von 10 bis 80 m$^2$/g.

Bevorzugt beträgt die Packungsdichte der Siliziumpartikel als Pulverschüttung 10 bis 50 g/l, insbesondere entlüftet um 100 g/l. entlüftet ca. 150g/l. Liegen die Siliziumpartikel als 3D-Formkörper gesintert vor, kann die Packungsdicht von 700 g/l bis 1900 g/l betragen. Bei dichtgesinterten Siliziumpartikeln kann die Packungsdichte von 1,9 bis 2,3 kg/l betragen. Stammen die Siliziumpartikel aus einem Sägeprozess, dann beträgt die Packungsdichte der Siliziumpartikel als Pulverschüttung bis zu 1500 g/l. Liegen die Siliziumpartikel als 3D-Formkörper gesintert vor, kann die Packungsdicht von bis zu 2500 g/l betragen. Bei dichtgesinterten Siliziumpartikeln kann die Packungsdichte von 2,5 bis 2,8 kg/l betragen.

Liegt Silizium in Form von Folien mit einer Schichtdicke von größer 0,1 Mikrometer vor, ist es weiter bevorzugt, wenn die Silizium-Folie beispielsweise als Bandmaterial angelehnt an technisch vorhandenes Material aus Druckprozessen vorliegt. Das Bandmaterial der Folie kann auf Zielformate, wie z.B. auf A5 zugeschnitten werden.

Die Kathode und/oder die Anode weisen vorzugsweise eine Porosität auf, die über Dichtemessung bestimmt wird. Vorzugsweise beträgt die Porosität der Kathode und/oder der Anode zwischen 10 und 45 Vol.-% in Bezug auf das Gesamtvolumen der Kathode von 100 Vol.-%, bevorzugt von 18 bis 32 Vol.-%, besonders bevorzugt von 25 Vol.-% bis 27 Vol.-%. Die Porosität ist der Zwischenraum in der Anode oder in der Kathode, der für den fluiden Elektrolyten verfügbar ist. Die Porosität kann als prozentualer Volumenanteil bezogen auf das geometrische Gesamtvolumen der Kathode oder der Anode ausgedrückt werden. Somit können die über die Porosität gebildeten Zwischenräume teilweise oder vollständig im Anwendungsfall mit Elektrolyt gefüllt sein.

Die Porosität der Silizium-Anode (Volumendichte Anodenmaterial) beträgt bei Verwendung von Reinsilizium (99,9% und mit einer spezifischen Dichte der Anode zwischen 0,1 g/cm$^3$ und 1,8 g/cm$^3$) zwischen 95% [(1-0,1/2,3)*100%] und 21% [(1-1,8/2,3)*100%]. Bei relevanten Fremdanteilen im Silizium wie z.B. Eisen (Fe) können die Werte davon abweichen, da die Dichte des Reinsiliziums 2,3 g/cm$^3$ beträgt, wogegen jene von Eisen-Silizium (FeSi) jedoch bis zu 6,1 g/cm$^3$ betragen kann, womit sich die zuvor aufgeführten Werte entsprechend ändern können.

Nach gleichfalls bevorzugten Alternativen kann das Gewichtsverhältnis von Mangandioxid im Kathodenmaterial zum Elektrolyten zwischen 1,2 und 3,1 betragen. Alternativ oder gleichzeitig kann das Gewichtsverhältnis der Silizium-Partikel im Anodenmaterial zum Elektrolyten zwischen 0,6 und 1,7 betragen.

Ein besonders bevorzugtes Kathodenmaterial der Kathode umfasst zu 70 bis 95 Gew.-% als Kathodenmaterial Mangandioxid, insbesondere Battery Grade und bevorzugt einer Partikelgröße von kleiner gleich 10 Mikrometer, und einen Kohlenstoff enthaltenden Leitfähigkeitsvermittler, insbesondere von 5 bis 30 Gew.-% Leitfähigkeitsvermittler, und optional weitere Additive auf 100 Gew.-% des Kathodenmaterials. Der Leitfähigkeitsvermittler ist vorzugsweise ein Kohlenstoff enthaltender Partikel, Mischung dieser oder eine Kohlenstoff enthaltende Paste.

Der Kohlenstoff enthaltende Leitfähigkeitsvermittler umfasst besonders bevorzugt

i) Kohlenstoff enthaltende Partikel, die umfassen Ruß, Leit-Ruß, elektrochemisch hergestellten Ruß, Elektroruß, Aktivkohle, Graphit, Graphen und/oder eine Mischung davon, und/oder

ii) eine Kohlenstoff enthaltende Paste, die elektrisch leitfähige Polymere, die Heteroatome N, O und/oder S umfassen können, wie Polyanilin oder Graphen.

Es wurde gefunden, dass Elektroruß als Leitfähigkeitsvermittler wirksamer ist als Graphitpulver. Der hinreichende Anteil von Elektroruß im Anodenmaterial liegt vorzugsweise im Bereich von 50 bis 90 Gew.-% in Bezug auf die Gesamtzusammensetzung. Mit einer zwei Zellen umfassenden Batterie mit je 4,5 cm$^2$ aktiver Elektrodenfläche könnte bereits eine Leistung ausreichend für den Betrieb eines kleinen Lüfters bereitgestellt werden.

In einer besonderen Variante der elektrochemischen Primärzelle liegt an der Kathode und/oder Anode vorzugsweise ein Druck von 0,01 bis 10 MPa an, bevorzugt von 0,5 bis 5,0 MPa, um das Pulvermaterial zu verdichten und den Innenwiderstand der Elektroden auf weniger 10 Ohm/cm zu reduzieren.

Gleichfalls Gegenstand der Erfindung ist eine mehrzellige Batterie wobei die Batterie mindestens zwei bis 15.000, insbesondere 3 bis 500, bevorzugt 4 bis 100, mit einander verbundene Primärzellen umfasst, vorzugsweise sind von den zwei bis 15.000 mit einander verbundenen Primärzellen 4 bis 100 in Serie, die weiteren entsprechend parallel geschaltet. Die Batterie wird definiert nach der DIN-Norm 40729.

Als Batterietypen kommen auch vorzugsweise Kleinbatterien, bevorzugt Hörgerätebatterien in Frage. Die Geometrie der Anode und/oder Kathode weist dann vorzugsweise eine Dimensionierung auf, dass sie in die Standard-Zylindergröße für A675, A13, A312 und/oder A10 passt.

**Ausführungsbeispiele:**

Der Betrieb von Silizium enthaltenden Primärzellen mit alkalischen, wässrigen Elektrolyten hat den wesentlichen Nachteil der Korrosion des Siliziums. Einerseits kann durch die Korrosion Wasserstoff freigesetzt werden und andererseits beginnt der Elektrolyt ab etwa einer Konzentration von 4M an Silizium-Gehalt zu gelieren.

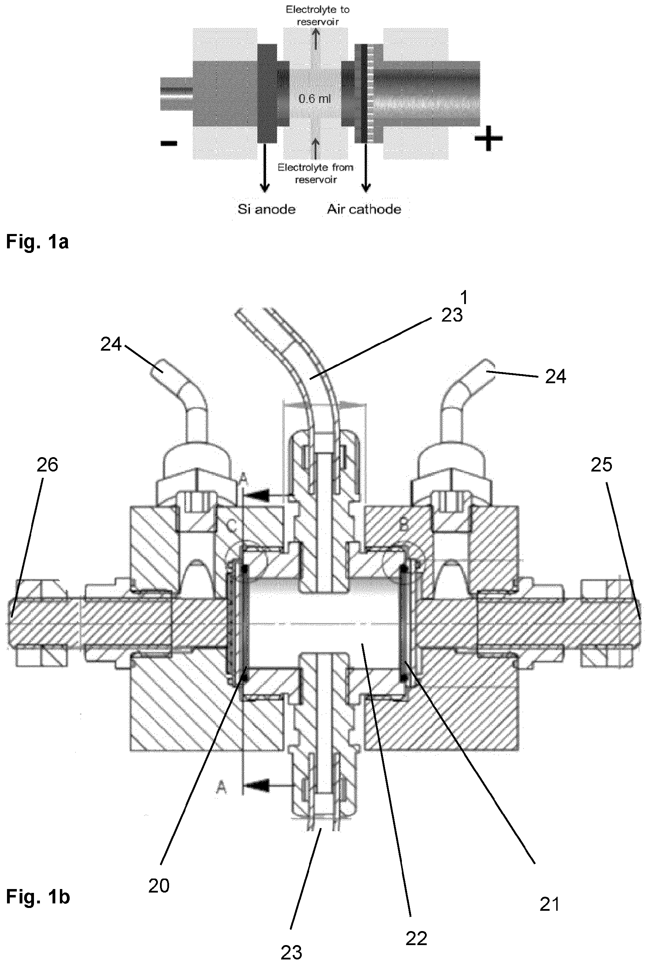

Der prinzipielle Aufbau der Primärzelle ist in **Figur 1a** dargestellt. Die Primärzelle weist eine Anode aus Silizium und eine Luftkathode auf. Zwischen Anode und Kathode ist ein Reservoir zur Aufnahme eines Elektrolyten von 0,6 ml vorgesehen. Fig. 1b stellt eine andere Zellanordnung einer Primärzelle dar und zeigt einen realen Aufbau der Versuchszelle: dabei ist

20: Anode in Form einer Scheibe umfassend Siliziumpartikel als Pulver in einem Separator bzw. als gesinterte Scheibe aus Siliziumpartikeln. Alternative kann eine Silizium-Kohlenstoffpaste als Anode in Form einer Scheibe eingesetzt werden,

21: Luftkathode,

22: Elektrolytreservoir;

23: Zu-/Ableitung Elektrolytflüssigkeit;

24: Zu-/Ableitung Inertgas (Argon und/oder N$_2$);

25: Stromabnehmer Kathode,

26: Stromabnehmer Anode.

Zur Vermeidung der Korrosion von Silizium wurden verschiedene Verbindungen auf ihre, die Korrosion von Silizium inhibierenden Eigenschaften in einem alkalischen Elektrolyten ohne und mit Entladung untersucht, deren Ergebnisse in den folgenden Figuren dargestellt sind

**Batterieversuche A:** Wässriger Elektrolyt und Inhibitoren mit Siliziumpulver aus einem Wafer-Säge-Prozess als Silizium Anoden (Mikropartikuläres Silizium):

Wässriger Elektrolyt:

i) 5M KOH und ii) 5M KOH + 4000 Gew.-ppm PEG 400

Anodenzusammensetzung:

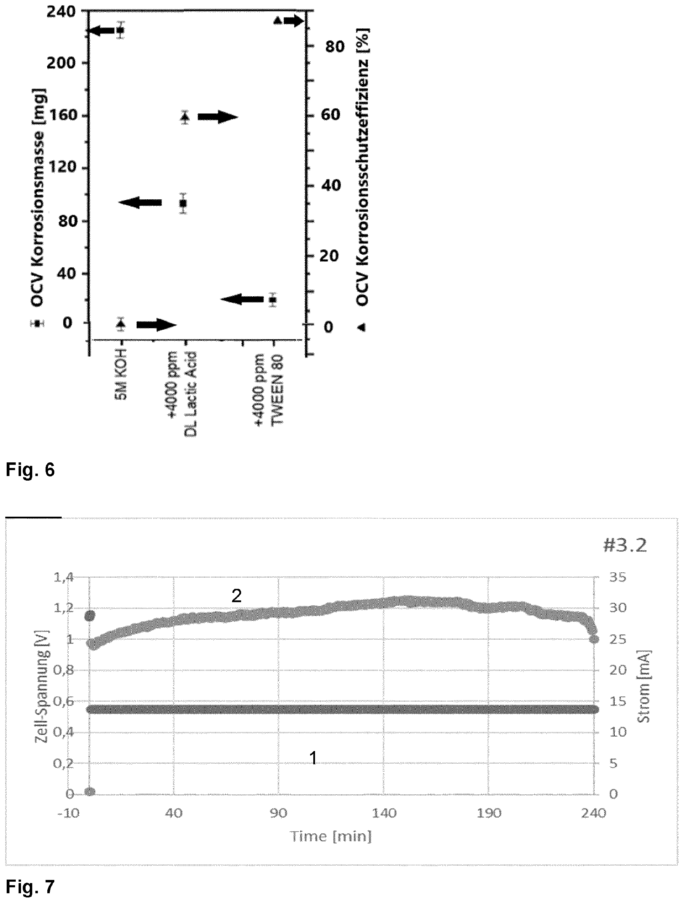

Anode 1: Ruß-Silizium-Siliciumcarbid-Pulver in Rundzelle gemäß **Figur 1b**) Leerlaufspannung: OCV=1,2 Volt, Elektrodenabstand: 2 cm, Zellspannung unter Belastung = 0,8V (Spannung eingeprägt, vgl. Figur 7 #1). Der Strom über der Zeit kann ebenfalls **Figur 7** Kurve #2 entnommen werden, Über einen Zeitraum von mehr als 4 Stunden konnte der Zelle ein Strom von > 25 mA entnommen werden. Die Leistungsabgabe der Zelle über 4 Stunden berechnet sich daraus zu $P = U_I * I_L = 0,8\ V * 25\ mA = 20\ mW$.

Anode 2 erhalten aus Silizium-Siliziumcarbid-Pulver nach Spark-Sinter-Prozess. Nachfolgende Tabelle zeigt die Konzentrationen ausgewählter Metalle gemäß GD-MS-Analyse aus der so gewonnenen Tablette in Gew.-ppm.

| Fe | Mn | Ni | Cu | Zn | Pb | Cr | Al | Co | Ti | Ca | Mg | B | P |
|------|-----|-----|-----|-----|-----|-----|-----|-----|-----|-----|-----|-----|-----|
| 3247 | 257 | 15 | 479 | 221 | 1 | 7 | 49 | 0,9 | 24 | 276 | 157 | 0,9 | 10 |

Dem Silizium-Siliziumcarbid-Pulver wurde vor dem Spark-Sinter-Prozess noch 2 Gew.-% $SiO_2$ als Füllstoff vor der Verdichtung zugegeben. Die folgende **Figur 1d** zeigt oben von links nach rechts 1. Das verwendete Silizium-Siliziumcarbid-Pulver 2. Die Anode erhaltene nach Spark-Sintern-Prozess sowie 3. REM-Aufnahme der Oberfläche der erhaltenen Tablette (2). **Figur 1d** unten zeigt von links nach rechts 4. Die Partikelverteilung des verwendeten Silizium-Siliziumcarbid-Pulvers (1), 5. XRD-Analyse der erhaltenen Tablette verdichtet (2.) sowie 6. schematische Illustration der REM-Aufnahme (3). Der Kohlenstoffanteil in der die Anode bildenden Tablette kann bis zu 25 Gew.-% betragen.

Damit wurden Zellen gemäß **Figur 1b** bestückt mit Elektrodenabstand von 2 cm, die LuftKathode wurde mit dem Prozessgas $O_2$ bei einem Volumenstrom von 10nL/h überlagert.

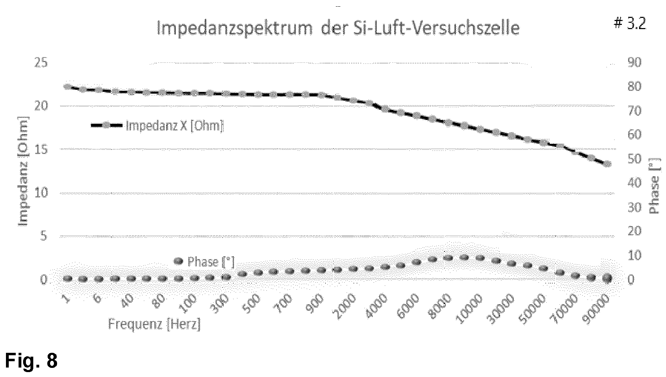

Für eine Beispielzelle wurde die Wechselstromwiderstand (Impedanz) bestimmt: Dazu wurde im Frequenzbereich zwischen 1 Hz und 100 kHz gemessen. Die Impedanz besitzt zwischen 1 Hz bis 1kHz überwiegend einen Wirkwiderstand in Höhe von ca. 21 Ohm. Bei höheren Frequenzen, also ab 1 kHz bis 100kHz beobachtet man eine zunehmende Phasenverschiebung (d.h. die Impedanz wird komplex kapazitiv). Typisch für kapazitives Verhalten nimmt der Widerstand mit höheren Frequenzen deutlich ab, vgl. Figur 8.

Während des Betriebs wurde der Elektrolyt der Versuchszelle mit einer Durchflussgeschwindigkeit von 0,1 mL/min kontinuierlich via 100 ml-Vorlage umgepumpt.

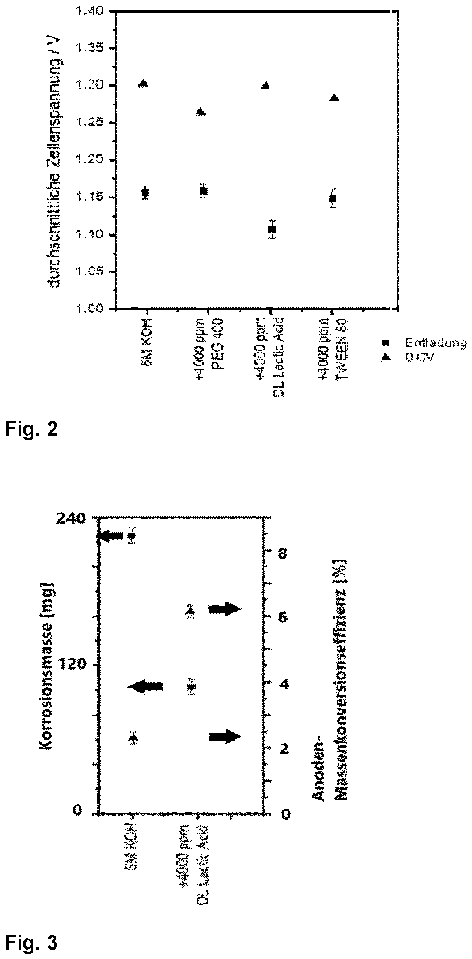

Die **Figuren 2** bis **6** zeigen die Zellspannung (V) einer Primärzelle gemäß **Figur 1b** betrieben mit wässrigen Elektrolyten mit 5M KOH sowie additiviert mit den nachfolgend genannten Zusätzen an erfindungsgemäßen Verbindungen.

Die Messungen erfassen die offene Zellspannung (OCV: open circuit) und die Zellspannung unter Entladung mit 1 mA/cm$^2$ (25 °C, 50% rel. Luftfeuchtigkeit). Die nachfolgenden Figuren zeigen dazu die Ergebnisse der Messungen wobei die Additive im Elektrolyten variiert wurde.

**Fig. 2:** Zeigt die durchschnittliche Zell-Spannung im Leerlauf (OCV) und unter Belastung mit 1 mA über 24 Stunden Zellbetrieb.

Die Zellspannungen unterscheiden sich sowohl im Leerlauf (OCV -1,27 Volt) als auch unter Belastung (Entladung ~ 1,15 V) kaum in Abhängigkeit vom Elektrolyt-Additiv sowie vom wässrigen 5M-KOH Elektrolyten.

**Fig. 3:** Zeigt im Diagramm, dass sich durch 4000 ppm Elektrolytadditiv DL Lactic Acid der Werte der Anoden Massenkonversionseffizienz von rund 2,5% auf über 6% verbessert und die Korrosionsmasse sich entsprechend reduziert. 1 mA über 24h entsprechen 84,6 Coulomb.

Damit und mit

$m_{corr}$: Massenverlust durch Korrosion
$m_{tot}$: Gesamtmassenverlust durch Korrosion + Entladung
$m_{dis}$: Massenverlust durch Entladung

ergibt sich die

$$\text{Anoden Massenkonversionseffizienz} = m_{dis}/(m_{dis}+ m_{corr})\cdot 100\%$$

in Fig. 3.

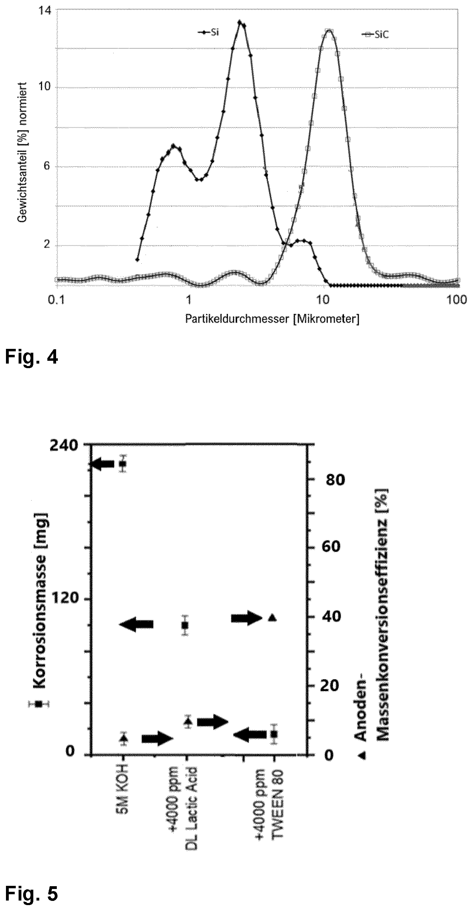

**Fig. 5** zeigt den Materialverbrauch von Silizium-Luft-Zellen ausgefertigt mit gesinterten Silizium-Siliziumcarbid-Pulver-Anoden, die über 24h mit 1 mA entladen wurden, in Abhängigkeit vom Elektrolytadditiv. **Fig. 4** zeigt die bimodale Partikelgrößenverteilung der verwendeten Wafer-Sägereste mit den zwei Hauptkomponenten Silizium und Siliziumcarbid. Die Siliziumpartikelgrößen liegen zwischen 400nm und 8 Mikrometer. Dem gegenüber finden sich Siliziumcarbid-Partikel überwiegend zwischen 7 Mikrometer und 20 Mikrometer.

**Fig. 5** zeigt im Diagramm, in Ergänzung zu Fig.3, dass durch Tween 80 als Elektrolytadditiv die Korrosion zusätzlich vermindert. Die Werte der Anoden Massenkonversionseffizienz unter Belastung mit 1 mA betragen für den wässrigen 5M-KOH-Elektrolyten rund 2,5%, additiviert mit DL Lactic Acid ungefähr 6% und additiviert mit Tween 80 rund 40% verbessert und die Korrosionsmasse sich entsprechend reduziert. 1 mA über 24h entsprechen 84,6 Coulomb.

**Fig. 6** zeigt im Diagramm Massenverlust durch Korrosion in wässrigem Elektrolyten mitunterschiedlicher Additivierung im OCV-Betrieb. Die Korrosionsmasse für die Siliziumanoden wurden nach 24 Stunden Betrieb entnommen, mit Wasser gereinigt, getrocknet und dann ausgewogen (Zellen in OCV, keine Entladung). Die Massendifferenz der Silizium-Anode im wässrigen 5M-KOH-Elektrolyten beträgt rund 233 mg (Bezugsgröße), mit Additive DL Lactic Acid 95 mg (Korrosionschutzeffizienz = 1- 95mg/233mg=1-0,4 → 60%) und mit Tween 80-Additive 19 mg (Korrosionschutzeffizienz = 1-19mg/233mg=1-0,08 → 92%).

Die Korrosionschutzeffizienz berechnet sich aus =

$$(m_{(corr(5M\ KOH)} - m_{corr(inhibitor)}/m_{corr(5M\ KOH)} \cdot 100\%$$

= (Korrosionsmasse für 5M KOH-Korrosionsmasse für

Inhibitor)/Korrosionsmasse für 5M KOH

Die Messung der durchschnittlichen Zellspannung gemäß Figur 3 zeigt, dass für eine erfindungsgemäße Anodenzusammensetzung durch die Elektrolytzusammensetzung die Zellspannungswerte sowohl im Leeerlauf (OCV) als auch unter Belastung (1mA) kaum voneinander unterscheiden. Interessant ist Figur 5 wobei die Elektrolytzusammensetzungen mit DL Lactic Acid eine geringe Korrosions gegenüber einer Elektrolytzusammensetzung (5 M KOH ohne Additiv) zur Folge hat und damit eine verbesserte Anoden Massenkonversionseffizienz erzielt wird. Entsprechend bewirkt Tween 80 wie in Figur 5 dargestellt, eine nochmals verbesserte Korrosionsschutzeffizienz gegenüber einer Zusammensetzung ohne Additiv. Im OCV Zustand ermittelte Korrosionsmassenverluste sind in Fig. 6 gegenübergestellt. Auch im OCV Betrieb konnte durch Zugabe der Additive DL Lactic Acid und Tween 80 die Korrosionsschutzeffizienz verbessert werden.

**Batterieversuche B**:

Die nachfolgenden Tabellen stellen ebenfalls verwendete Proben von amorphen Silizium-Partikeln und des dort verwendeten Leitfähigkeitsvermittlers dar.

Tabelle 1: Röntgenamorphe Silizium-Partikel

| Silizium-Partikel | Primärpartikel [nm] | Agglomerate und/oder Aggregate [nm] | Dotierung | Si [Gew.-%] |
|---|---|---|---|---|
| **A** | 5-15 | 150-1000 | < 0,1 Gew.-ppm Intrinsischer Halbleiter | 99,99999 (electronic grade) |
| **B** | 100-300 | 200-2000 | < 10 Gew-ppm | 99,999 Solar-grade |
| **C** | 100-300 | 400-1000 | 1 Gew.-% Intrinsischer p-Leiter | 98,9 |
| D | 100 - 300 | 400 - 1000 | 1,8 Gew.-% Bor ($5\cdot10^{19}$/cm$^3$) | 98,19 |

**Tabelle 2:** Leitfähigkeitsvermittler enthaltend Kohlenstoff enthaltende Partikel

| Kohlenstoff enthaltende Partikel | Kohlenstoff enthaltende Partikel | Partikelgröße [nm] | Agglomerate und/ oder Aggregate [nm] | Dotierung |
|---|---|---|---|---|
| Vulcan-XC72R (Elektroruß) | | 20 bis 40 oder 25 bis 80 | 350 bis 1500 350 bis 1500 | < 100 Gew.-ppm n-Donoren und p-Akzeptoren |
| Graphit (Naturgraphit vermalen) | ca. 20% Fettanteil | 16000-63000 | Flocken, flockig | < 1 Gew.-% |

Mit den Siliziumpartikeln und den Kohlenstoffpartikeln wurden Elektrodenpasten hergestellt, die alternativ mit Bindemittel versetzt gepresst werden können. Die Silizium-Luft-Zellen mit Siliziumpartikeln als Anodenmaterial und Hydroxycarbonsäuren als Elektrolytadditiv wurden gemäß **Figur 1b** realisiert.

Auch in diesen Anoden mit partikulärem Silizium konnte eine Inhibierung der Korrosion durch Zugabe von Hydroxycarbonsäure zum alkalischen Elektrolyten nachgewiesen werden.

**Patentansprüche**

1. Elektrochemische Primärzelle mit Metall-enthaltendem Anodenmaterial sowie alkalischem Elektrolyten **dadurch gekennzeichnet, dass**

   das Metall-enthaltende Anodenmaterial Silizium umfasst, sowie Kohlenstoff und mindestens ein weiteres Metall umfasst, wobei das mindestes eine weitere Metall mindestens ein Metall von Mangan, Kalzium, Zink, Aluminium, Eisen und/oder eine Legierung umfassend eines oder mehrere der vorgenannten weiteren Metalle umfasst, wobei die Oberfläche des Metall-enthaltenden Anodenmaterials zumindest teilweise Sauerstoff enthaltende Silizium-Verbindungen aufweist.

2. Primärzelle nach Anspruch 1 **dadurch gekennzeichnet, dass** die Primärzelle als Elektrolyten eine wässrige alkalische Elektrolytzusammensetzung umfasst, die enthält

   - 2,0 bis 99,0 Gew.-% Wasser, und
   - 0,0001 bis 15 Gew.-% mindestens eine Hydroxycarbonsäure, Carboxylat einer Hydroxycarbonsäure, Ester einer Hydroxycarbonsäure, Ether eines Carboxylats einer Hydroxycarbonsäure, polymere Verbindungen basierend auf Hydroxycarbonsäuren, Carboxylaten von Hydroxycarbonsäure, Estern von Hydroxycarbonsäuren oder Gemisch enthaltend mindestens zwei der vorgenannten Verbindungen, und
   - einen Gehalt von 0,001 bis 40 Gew.-% Alkalihydroxid

   in Bezug auf die Gesamtzusammensetzung von 100 Gew.-%.

3. Primärzelle nach Anspruch 2, **dadurch gekennzeichnet, dass** die Hydroxycarbonsäure in der Elektrolytzusammensetzung ausgewählt ist aus Milchsäure, insbeondere D-Milchsäure, L-Milchsäure und/oder Gemische von D/L-Milchsäure, $\alpha$-Hydroxycarbonsäuren, insbesondere Fruchtsäuren, insbesondere Äpfelsäure, Citronensäure, Fumarsäure, Gluconsäure, Glycolsäure, Mandelsäure, Milchsäure, Oxalsäure, Salicylsäure, $\alpha$-Hydroxycaprylsäure und Weinsäure, $\beta$-Hydroxycarbonsäuren, insbesondere $\beta$-Hydroxybuttersäure und/oder Mevalonsäure, oder Gallussäure, 4-Hydroxybutansäure, Polyhydroxybuttersäure, Salicylsäure (2-Hydroxybenzoesäure), 4-Hydroxybenzoesäure (PHB) oder das Carboxylat von Hydroxycarbonsäure, Ester von Hydroxycarbonsäure, Ether von Carboxylat von Hydroxycarbonsäure auf mindestens einer der vorgenannten Hydroxysäuren basiert, und/oder die polymeren Verbindungen auf mindestens einer der Hydroxycarbonsäuren oder einem Gemisch enthaltend mindestens zwei der vorgenannten Verbindungen basiert.

4. Primärzellenach Anspruch 2 oder 3, **dadurch gekennzeichnet, dass** die Elektrolytzusammensetzung umfasst mindestens eine lineare oder verzweigte Polyalkylenoxid-Gruppen aufweisende Verbindung mit mindestens drei Alkylenoxid-Gruppen in der Verbindung oder Gemische von mindestens zwei dieser Verbindungen, wobei die Alkylenoxid-Gruppen in der Polyalkylenoxid-Gruppen aufweisenden Verbindung ausgewählt sind aus Alkylenoxid-Gruppen mit 2 bis 6 C-Atomen je Alkylenoxid-Gruppe, und, wobei mindestens eine terminale Gruppe der Polyalkylenoxid-Gruppen aufweisenden Verbindung ausgewählt ist aus Hydroxy-Gruppen, Alkyl-Gruppen, Alkoxy-Gruppen, Alkenyl-Gruppen, Alkenyloxid-Gruppen, Carbonsäure-Gruppe, Carbonsäureester-Gruppen, Carbonsäureamid-Gruppen, aromatischen-Gruppen und/oder Gruppen enthaltend cyclische-Ether.

5. Primärzelle nach Anspruch 4, **dadurch gekennzeichnet, dass** mindestens eine terminale Gruppe der Polyalkylenoxid-Gruppen aufweisenden Verbindung eine Hydroxy-Gruppe ist und mindestens eine weitere terminale Gruppe ausgewählt ist aus Hydroxy-Gruppen, Alkyl-Gruppen, Alkoxy-Gruppen, Alkenyl-Gruppen, Alkenyloxid-Gruppen, Carbonsäureester-Gruppen, aromatischen-Gruppen, insbesondere Alkyl-funktionalisierte Phenyl-Gruppen, besonders bevorzugt 4-(1,1,3,3-Tetramethylbutyl)-phenyl-polyethyleneglykol, bevorzugt 4-(1,1,3,3-Tetramethylbutyl)phenyl-polyethylene glycol, t-Octylphenoxypolyethoxyethanol, Polyethylene glycol tert-octylphenyl ether und/oder Gruppen enthaltend cyclische-Ether.

6. Primärzellenach Anspruch 4 oder 5, **dadurch gekennzeichnet, dass** die Hydroxycarbonsäuren ausgewählt sind aus Enantiomeren, Diastereomeren oder Gemischen dieser.

7. Primärzellenach einem der Ansprüche 2 bis 6, **dadurch gekennzeichnet, dass** die Elektrolytzusammensetzung Alkalihydroxid enthält, insbesondere Kaliumhydroxid.

8. Primärzelle nach einem der Ansprüche 2 bis 7, **dadurch gekennzeichnet, dass** die Elektrolytzusammensetzung

- 2,0 bis 99,0 Gew.-% Wasser,
- 0,0001 bis 15 Gew.-% mindestens eine Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen,
- einen Gehalt von 0,001 bis 40 Gew.-% Alkalihydroxid, und optional
- 0,0001 bis 15 Gew.-% Polyalkylenoxid-Gruppen aufweisende Verbindungen oder Gemische dieser,

in Bezug auf die Gesamtzusammensetzung von 100 Gew.-% enthält.

9. Primärzelle nach einem der Ansprüche 2 bis 8, **dadurch gekennzeichnet, dass** die Elektrolyszusammensetzug enthält Wasser, insbesondere destilliertes Wasser, und eine Stoffmengenkonzentration von 1 bis 6 Mol/Liter Alkalihydroxid, insbesondere Kaliumhydroxid, und 10 ppm-Gew. bis 50.000 ppm-Gew. mindestens eine Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen oder Gemische von mindestens zwei dieser Verbindungen aufweist.

10. Primärzelle nach einem der Ansprüche 1 bis 9, **dadurch gekennzeichnet, dass** sie eine Anode umfassend Metall-enthaltendes Anodenmaterial, eine Kathode sowie mindestens einen Separator aufweist, wobei der Separator die Kathode und die Anode voneinander separiert.

11. Primärzelle nach Anspruch 11, **dadurch gekennzeichnet, dass**

i) das Material der Kathode der Primärzelle Mangandioxid und optional einen Kohlenstoff enthaltenden Leitfähigkeitsvermittler aufweist, wobei die Primärzelle in einem hermetisch abgeschlossen Gehäuse vorliegt, oder
ii) die Kathode der Primärzelle eine Luftkathode ist und das Material der Kathode der Primärzelle Mangandioxid und optional einen Kohlenstoff enthaltenden Leitfähigkeitsvermittler aufweist, insbesondere weist die Luftkathode eine für Kohlendioxid undurchlässige Membran auf.

12. Primärzelle nach einem der Ansprüche 1 oder 10 bis 11, **dadurch gekennzeichnet, dass** das Anodenmaterial oder die Anode als Anodenmaterial Silizium umfasst, wobei das Silizium in Form von Silizium-Partikeln vorliegt und die Silizium-Partikel einen Gehalt an Kohlenstoff von 10 Gew.-ppm bis 20 Gew.-% in Bezug auf die Gesamtzusammensetzung der Silizium-Partikel von 100 Gew.-% aufweisen und optional die Siliziumpartikel aus einem Wafersägeprozess oder Recyclingprozess stammen.

13. Primärzelle nach einem der Ansprüche 1 oder 10 bis 12, **dadurch gekennzeichnet, dass** das Anodenmaterial oder die Anode als Anodenmaterial Silizium und Siliziumcarbid umfasst, insbesondere, wobei Silizium und Siliciumcarbid in Form von Silizium-Partikeln vorliegen, bevorzugt liegt das Silizium in Form von Partikeln einer Partikelgröße von 400 nm bis 8 Mikrometer und/oder das Siliciumcarbid in Form von Partikeln einer Partikelgröße von 7 Mikrometer bis 20 Mikrometer vor.

**14.** Primärzelle nach einem der Ansprüche 10 bis 13, **dadurch gekennzeichnet, dass** die Anode als Anodenmaterial Silizium umfasst, und die Anode als dreidimensionaler Formkörper vorliegt, wobei in den Formkörper eine Elektrode als Elektronenleiter eingebettet ist, und insbesondere weist der Formkörper eine Dichte von 0,1 g/cm$^3$ bis 2,5 g/cm$_3$ auf.

**15.** Primärzelle nach Anspruch 14, **dadurch gekennzeichnet, dass** die Elektrode ein metallisches Netz, ein Netz aus einer metallischen Legierung, eine Folie, eine Folie mit Ausnehmungen und/oder eine Membran ist, oder die Elektrode aus mindestens einem Metall oder einer Legierung gebildet ist und eine dendritische Form aufweist. Bevorzugt ist der Formkörper eine Platte oder Zylinder mit einer Höhe von mindestens 15 mm, Breite von 15 mm und einer Dicke von mindestens 5 mm.

**16.** Primärzelle nach einem der Ansprüche 1 oder 10 bis 13, **dadurch gekennzeichnet, dass** das Anodenmaterial oder die Anode umfasst

A) 35 bis 55 Gew.-% metallisches Silizium,

35 bis 55 Gew.-% Siliciumcarbid,
1 bis 7,5 Gew.-% $SiO_2$,
0,01 bis 7,5 Gew.-% Eisen,
optional 0,01 bis 2 Gew.-% Kupfer,
wobei die Gesamtzusammensetzung des Anodenmaterials 100 Gew.-% beträgt oder

B) 75 bis 99,998 Gew.-% Silizium,

5 bis 24,999 Gew.-% Kohlenstoff,
0,001 bis 5 Gew.-% mindestens eines weiteren Metalls, insbesondere umfassend Eisen größer gleich 5 mg/kg, Calcium größer gleich 5 mg/kg, Mangan größer gleich 0,1 mg/kg, und
0 bis 5 Gew.-% Sauerstoff, insbesondere 0,001 bis 4 Gew.-% Sauerstoff,
wobei die Gesamtzusammensetzung des Anodenmaterials 100 Gew.-% beträgt.

**17.** Mehrzellige Batterie, **dadurch gekennzeichnet, dass** die Batterie mindestens zwei bis 15.000 mit einander verbundene Primärzellen nach einem der Ansprüche 1 bis 16 umfasst, vorzugsweise sind die zwei bis 15.000 mit einander verbundenen Primärzellen in Serie geschaltet.

**18.** Verwendung von Siliziumpartikeln aus einem Wafersägeprozess in einer Primärzelle als Metall-enthaltendes Anodenmaterial, und insbesondere zur Herstellung einer Anode umfassen eine Elektrode als Elektronenleiter.

**19.** Anode, insbesondere zur Verwendung in einer Primärzelle nach einem der Ansprüche 1 bis 16, umfassend

A) 35 bis 55 Gew.-% metallisches Silizium,

35 bis 55 Gew.-% Siliciumcarbid,
1 bis 7,5 Gew.-% $SiO_2$,
0,01 bis 7,5 Gew.-% Eisen,
optional 0,01 bis 2 Gew.-% Kupfer,
wobei die Gesamtzusammensetzung des Anodenmaterials 100 Gew.-% beträgt oder

B) 75 bis 99,998 Gew.-% Silizium,

5 bis 24,999 Gew.-% Kohlenstoff,
0,001 bis 5 Gew.-% mindestens eines weiteren Metalls, insbesondere umfassend Eisen größer gleich 5 mg/kg, Calcium größer gleich 5 mg/kg, Mangan größer gleich 0,1 mg/kg, und
0 bis 5 Gew.-% Sauerstoff, insbesondere 0,001 bis 4 Gew.-% Sauerstoff,
wobei die Gesamtzusammensetzung des Anodenmaterials 100 Gew.-% beträgt.

Fig. 1a

Fig. 1b

**Fig. 1c**

**Fig. 1d**

**Fig. 2**

**Fig. 3**

**Fig. 4**

**Fig. 5**

**Fig. 6**

**Fig. 7**

Fig. 8

**EUROPÄISCHER RECHERCHENBERICHT**

Europäisches Patentamt
European Patent Office
Office européen des brevets

Nummer der Anmeldung

EP 22 15 8312

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHONG XING ET AL: "High-Capacity Silicon-Air Battery in Alkaline Solution", CHEMSUSCHEM, Bd. 5, Nr. 1, 9. Januar 2012 (2012-01-09), - 9. Januar 2012 (2012-01-09), Seiten 177-180, XP055964441, DE ISSN: 1864-5631, DOI: 10.1002/cssc.201100426 * Absatz [0177] - Absatz [0178] * ----- | 1-19 | INV. H01M4/06 H01M4/24 H01M4/38 H01M4/50 H01M4/62 H01M4/90 H01M6/14 H01M12/06 |
| X | DURMUS YASIN EMRE ET AL: "Long run discharge, performance and efficiency of primary Silicon-air cells with alkaline electrolyte", ELECTROCHIMICA ACTA, ELSEVIER, AMSTERDAM, NL, Bd. 225, 21. Dezember 2016 (2016-12-21), - 21. Dezember 2016 (2016-12-21), Seiten 215-224, XP029911334, ISSN: 0013-4686, DOI: 10.1016/J.ELECTACTA.2016.12.120 | 18 | |
| A | * Zusammenfassung * * Seite 216, Spalte 2 * ----- | 1-17,19 | RECHERCHIERTE SACHGEBIETE (IPC) H01M |
| X | DURMUS YASIN EMRE ET AL: "Investigation of the corrosion behavior of highly As-doped crystalline Si in alkaline Si-air batteries", ELECTROCHIMICA ACTA, Bd. 265, 31. Januar 2018 (2018-01-31), - 31. Januar 2018 (2018-01-31), Seiten 292-302, XP055965765, AMSTERDAM, NL ISSN: 0013-4686, DOI: 10.1016/j.electacta.2018.01.145 | 18 | |
| A | * Zusammenfassung * ----- -/-- | 1-17,19 | |

Der vorliegende Recherchenbericht wurde für alle Patentansprüche erstellt

| Recherchenort | Abschlußdatum der Recherche | Prüfer |
|---|---|---|
| München | 29. September 2022 | Martín Fernández, A |

EPO FORM 1503 03.82 (P04C03)

Seite 1 von 3

EUROPÄISCHER RECHERCHENBERICHT

Europäisches Patentamt
European Patent Office
Office européen des brevets

Nummer der Anmeldung

EP 22 15 8312

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BANSAL RISHABH ET AL: "Silicon-air batteries: progress, applications and challenges", SN APPLIED SCIENCES , Bd. 2, Nr. 6 29. Mai 2020 (2020-05-29), 29. Mai 2020 (2020-05-29), Seite 1141, XP055964258, ISSN: 2523-3963, DOI: 10.1007/s42452-020-2925-7 Gefunden im Internet: URL:https://link.springer.com/content/pdf/10.1007/s42452-020-2925-7.pdf | 18 | |
| A | * Zusammenfassung * ----- | 1-17,19 | |
| X | SARWAR SAAD ET AL: "Transformation of Silicon Nanowire into Nanopyramid in Alkaline Solution and its Implication in Silicon-Air Battery : Transformation of Silicon Nanowire into Nanopyramid in Alkaline Solution", BULL. KOREAN CHEM. SOC., Bd. 37, Nr. 7, 29. Juni 2016 (2016-06-29), - 29. Juni 2016 (2016-06-29), Seiten 997-1003, XP055964321, ISSN: 1229-5949, DOI: 10.1002/bkcs.10808 | 18 | RECHERCHIERTE SACHGEBIETE (IPC) |
| A | * Zusammenfassung * * Seite 998, Spalte 2 * ----- | 1-17,19 | |
| X | WO 2011/061728 A1 (TECHNION RES & DEV FOUNDATION [IL]; EIN-ELI YAIR [IL]) 26. Mai 2011 (2011-05-26) | 18 | |
| A | * Seite 29 * ----- | 1-17,19 | |
| | -/-- | | |

Der vorliegende Recherchenbericht wurde für alle Patentansprüche erstellt

| Recherchenort | Abschlußdatum der Recherche | Prüfer |
|---|---|---|
| München | 29. September 2022 | Martín Fernández, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Seite 2 von 3

Europäisches Patentamt
European Patent Office
Office européen des brevets

# EUROPÄISCHER RECHERCHENBERICHT

Nummer der Anmeldung

EP 22 15 8312

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WANG YIFEI ET AL: "Solid-state Al-air battery with an ethanol gel electrolyte", GREEN ENERGY & ENVIRONMENT, 26. Mai 2021 (2021-05-26), - 26. Mai 2021 (2021-05-26), XP055965828, ISSN: 2468-0257, DOI: 10.1016/j.gee.2021.05.011 * Zusammenfassung * ----- | 1-19 | |
| A | PRAKOSO BAGAS ET AL: "Recent Progress in Extending the Cycle-Life of Secondary Zn-Air Batteries", CHEMNANOMAT , Bd. 7, Nr. 4 1. April 2021 (2021-04-01), Seiten 354-367, XP055965837, ISSN: 2199-692X, DOI: 10.1002/cnma.202000672 Gefunden im Internet: URL:https://onlinelibrary.wiley.com/doi/full-xml/10.1002/cnma.202000672 * Zusammenfassung * ----- | 1-19 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 29. September 2022 | Martín Fernández, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

Seite 3 von 3

**ANHANG ZUM EUROPÄISCHEN RECHERCHENBERICHT
ÜBER DIE EUROPÄISCHE PATENTANMELDUNG NR.**

EP 22 15 8312

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2022

| Im Recherchenbericht angeführtes Patentdokument | Datum der Veröffentlichung | Mitglied(er) der Patentfamilie | Datum der Veröffentlichung |
|---|---|---|---|
| WO 2011061728 A1 | 26-05-2011 | EP 2502295 A1<br>US 2012299550 A1<br>WO 2011061728 A1 | 26-09-2012<br>29-11-2012<br>26-05-2011 |

EPO FORM P0461

Für nähere Einzelheiten zu diesem Anhang : siehe Amtsblatt des Europäischen Patentamts, Nr.12/82